(19) Europäisches Patentamt
European Patent Office
Office européen des brevets

(11) EP 1 873 777 A1

(12) **EUROPEAN PATENT APPLICATION**
published in accordance with Art. 153(4) EPC

(43) Date of publication:
**02.01.2008 Bulletin 2008/01**

(21) Application number: **06732038.2**

(22) Date of filing: **18.04.2006**

(51) Int Cl.:
***G11B 20/12*** *(2006.01)* ***G11B 7/0045*** *(2006.01)*
***G11B 20/10*** *(2006.01)*

(86) International application number:
**PCT/JP2006/308109**

(87) International publication number:
**WO 2006/112454 (26.10.2006 Gazette 2006/43)**

(84) Designated Contracting States:
**GB**

(30) Priority: **18.04.2005 JP 2005120118**

(71) Applicant: **Pioneer Corporation**
**Tokyo 153-8654 (JP)**

(72) Inventors:
- **ISHII, Hidehiro,**
**c/o PIONEER CORPORATION**
**Tokorozawa-shi,**
**Saitama 359-8522 (JP)**
- **HORA, Takashi,**
**c/o PIONEER CORPORATION**
**Tokorozawa-shi,**
**Saitama 359-8522 (JP)**
- **HAINO, Nobuo,**
**c/o PIONEER CORPORATION**
**Tokorozawa-shi,**
**Saitama 359-8522 (JP)**
- **KONO, Mutsumi,**
**c/o PIONEER CORPORATION**
**Tokorozawa-shi,**
**Saitama 359-8522 (JP)**
- **TANAKA, Yuichi,**
**c/o PIONEER CORPORATION**
**Tokorozawa-shi,**
**Saitama 359-8522 (JP)**

(74) Representative: **Haley, Stephen**
**Gill Jennings & Every LLP**
**Broadgate House**
**7 Eldon Street**
**London EC2M 7LH (GB)**

## (54) RECORDING DEVICE AND RECORDING METHOD FOR TWO-LAYER RECORDING DISC

(57) When VOB recording has reached the vicinity of the end position P6 of a first layer recording area (43), a cell close instruction is issued to stop encode processing for forming the next VOB to be stored. At this moment, for forming the next VOB to be recorded, content data stored in a buffer memory (18A) is used to form a VOB having, for example, a shorter length than a normal VOB. The VOB is recorded in the end portion of the first layer recording area. After this, a dummy cell having dummy data is recorded in an unrecorded area (122) of the end portion of the recording area.

[FIG. 13]

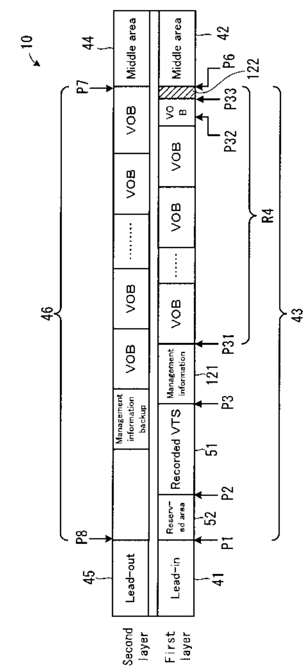


EP 1 873 777 A1

Printed by Jouve, 75001 PARIS (FR)

## Description

### Technical Field

The present invention relates to an apparatus for and a method of recording content data onto a dual-layer recording disk, i.e. an optical disk having two recording layers.

### Background Art

DVDs are widely spread as optical disks which can record information at high density. The DVDs include a read-only type DVD, a write-once type DVD, and a rewritable type DVD. The read-only type DVD includes a DVD having one layer with information recorded or a DVD having two layers with information recorded. Moreover, the dual-layer type DVD includes a single-sided dual-layer type and a double-sided dual-layer type.
Currently, a single-layer write-once type DVD is widely spread. The single-layer write-once type DVD has a recording capacity of 4.7GB. On the single-layer write-once type DVD, content data including, e.g., about two-hour video images and audio can be recorded in real time. For example, the content data including video images and audio, which are filmed and recorded by a video camera apparatus or the like, can be received. Substantially at the same time, the received content data can be encoded. Moreover, substantially at the same time, the encoded content data can be continuously recorded onto the write-once type DVD.

### Disclosure of Invention

### Subject to be Solved by the Invention

By the way, lately, the single-sided dual-layer write-once type DVD (hereinafter referred to as a "dual-layer write-once type DVD") has been developed. The dual-layer write-once type DVD has a larger recording capacity than that of the single-layer write-once type DVD. The dual-layer write-once type DVD is expected to realize the real-time recording of the content data, which is longer than the content data that can be recorded onto the single-layer write-once type DVD.
However, there is such a problem that it is hard to record such long content data in real time over the first layer and the second layer of the dual-layer write-once type DVD in compliance with a DVD video standard.
For example, if the content data is simply recorded over the first layer and the second layer of the dual-layer write-once type DVD, in some cases, a cell is recorded over the first layer and the second layer. This is against the DVD video standard. That is, the content data is encoded in accordance with the DVD video standard and then is recorded onto the write-once type DVD. This encoding process divides the content data into data blocks, which are reproduction units, i.e. cells. Then, the content data is recorded into a recording area of the DVD in such a state that it is divided into the cells. On the DVD video standard, the cell needs to be physically continuously recorded in the recording area of the DVD. Thus, it is not allowed that the cell is recorded over the layers of the dual-layer write-once type DVD.
Thus, in order to prevent the cell from being recorded over the layers, there is a possible method of recording the cell up to the tail of the recording area in the first layer and of recording the next cell from the head of the recording area in the second layer. According to this method, however, in some cases, an unrecorded area is left in the tail portion of the recording area in the first layer. Moreover, some data, which does not influence the reproduction, needs to be recorded in the unrecorded area, at the latest by a finalize process is completed with respect to the dual-layer write-once type DVD. If some data is recorded into the unrecorded area, another data is inserted between the last content data that is recorded in the recording area in the first layer and the first content data that is recorded in the recording area in the second layer, wherein the another data is different from the last content data and the first content data. Thus, there is a possibility that the DVD video standard is violated again from a different point of view. Moreover, depending on the content of the inserted data, there is a possibility that nothing is displayed on a screen immediately before a layer change, a noise is displayed on the screen, or no sound is produced, when the content data is reproduced.
As described above, it is not easy to record the content data in real time over the first layer and the second layer of the dual-layer write-once type DVD in compliance with the DVD video standard.
On the other hand, if the DVD video standard is not followed and a unique recording method is employed, it is released from the restriction that the cell is not to be recorded over the layers, or the like. Thus, it may be easier to record the content data in real time over the first layer and the second layer. However, if the unique recording method is employed, it is hardly possible to provide compatibility with competitors' products with regard to the recording and reproduction of the content data.
In order to solve the above-exemplified problems, it is therefore an object of the present invention to provide a recording apparatus, a recording method, and a computer program, which can record the content data in real time over the first layer and the second layer of the dual-layer recording disk in compliance with the DVD video standard.

Means for Solving the Object

The above object of the present invention can be achieved by a first recording apparatus for recording content data over two layers of a dual-layer recording disk, the recording apparatus provided with: an encoding device for encoding the content data, to thereby form a fixed-length data block including the encoded content data; a recording device for recording the data block formed by the encoding device, onto the dual-layer recording disk; and a layer changing device for changing a recording area into which the recording device records the data block, from a recording area of a first layer to a recording area of a second layer of the dual-layer recording disk, the recording device provided with a recording start position setting device for determining a recording start position at which the recording of the data block is started in the recording area of the first layer such that a length between the recording start position and a tail position of the recording area of the first layer is n times (n is an integer of 1 or more) as long as a length of the data block.

The above object of the present invention can be also achieved by a second recording apparatus for recording content data over two layers of a dual-layer recording disk, the recording apparatus provided with: an encoding device for encoding the content data, to thereby form a data block having a predetermined maximum length and including the encoded content data; a recording device for recording the data block formed by the encoding device, onto the dual-layer recording disk; a layer changing device for changing a recording area into which the recording device records the data block, from a recording area of a first layer to a recording area of a second layer of the dual-layer recording disk; and a dummy data recording device for recording dummy data onto the dual-layer recording disk, the recording device recording the data block formed by the encoding device, until a length of an unrecorded area which exists in a tail area of the recording area of the first layer becomes less than the maximum length of the data block, the dummy data recording device recording the dummy data into the unrecorded area after the data block is recorded by the recording device until the length of the unrecorded area becomes less than the maximum length of the data block.

The above object of the present invention can be also achieved by a third recording apparatus for recording content data over two layers of a dual-layer recording disk, the recording apparatus provided with: an encoding device for encoding the content data, to thereby form a data block including the encoded content data; a recording device for recording the data block formed by the encoding device, onto the dual-layer recording disk; and a layer changing device for changing a recording area into which the recording device records the data block, from a recording area of a first layer to a recording area of a second layer of the dual-layer recording disk, the recording device provided with a dividing / recording device which divides the data block if the entire data block cannot be recorded into an unrecorded area in a tail area of the recording area of the first layer, which records a former portion of the divided data block into an unrecorded area in the tail area of the recording area of the first layer, and which records a latter portion of the divided data block into the recording area of the second layer.

The above object of the present invention can be also achieved by a fourth recording apparatus for recording content data over two layers of a dual-layer recording disk, the recording apparatus provided with: an encoding device for encoding the content data, to thereby form a data block including the encoded content data; a recording device for recording the data block formed by the encoding device, onto the dual-layer recording disk; a layer changing device for changing a recording area into which the recording device records the data block, from a recording area of a first layer to a recording area of a second layer of the dual-layer recording disk; a judging device for judging whether the data block is recorded by the recording device up to near a tail position of the recording area of the first layer; and a dummy data recording device for recording dummy data onto the dual-layer recording disk, the encoding device forming a special data block by using the content data on which an encoding process is performed to form the data block to be recorded next, when the judgment is performed by the judging device or when a judgment result by the judging device is sent to the encoding device, or at about this time point, the recording device recording the special data block formed by the encoding device, into an unrecorded area in a tail area of the recording area of the first layer, following the data block which is already recorded immediately before the unrecorded area, the dummy data recording device recording the dummy data into the unrecorded area in the tail area of the recording area of the first layer after the special data block is recorded.

The above object of the present invention can be also achieved by a first recording method of recording content data over two layers of a dual-layer recording disk, the recording method provided with: an encoding process of encoding the content data, to thereby form a fixed-length data block including the encoded content data; a recording process of recording the data block formed in the encoding process, onto the dual-layer recording disk; and a layer changing process of changing a recording area into which the data block formed in the encoding process is to be recorded, from a recording area of a first layer to a recording area of a second layer of the dual-layer recording disk, the recording process provided with determining a recording start position at which the recording of the data block is started in the recording area of the first layer such that a length between the recording start position and a tail position of the recording area of the first layer is n times (n is an integer of 1 or more) as long as a length of the data block.

The above object of the present invention can be also achieved by a second recording method of recording content data over two layers of a dual-layer recording disk, the recording method provided with: an encoding process of encoding the content data, to thereby form a data block having a predetermined maximum length and including the encoded content data; a first recording process of recording the data block formed in the encoding process, into a recording area of a first layer of the dual-layer recording disk until a length of an unrecorded area which exists in a tail area of the recording area of the first layer becomes less than the maximum length of the data block; a layer changing process of changing a recording area into which the data block formed in the encoding process is to be recorded, from the recording area of the first layer to a recording area of a second layer of the dual-layer recording disk; a second recording process of recording the data block formed in the encoding process, into the recording area of the second layer; and a dummy data recording process of recording dummy data into the unrecorded data.

The above object of the present invention can be also achieved by a third recording method of recording content data over two layers of a dual-layer recording disk, the recording method provided with: an encoding process of encoding the content data, to thereby form a data block including the encoded content data; a recording process of recording the data block formed in the encoding process, onto the dual-layer recording disk; and a layer changing process of changing a recording area into which the data block formed in the encoding process is to be recorded, from a recording area of a first layer to a recording area of a second layer of the dual-layer recording disk, the recording process provided with dividing the data block if the entire data block cannot be recorded into an unrecorded area in a tail area of the recording area of the first layer, recording a former portion of the divided data block into an unrecorded area in the tail area of the recording area of the first layer, and recording a latter portion of the divided data block into the recording area of the second layer.

The above object of the present invention can be also achieved by a fourth recording method of recording content data over two layers of a dual-layer recording disk, the recording method provided with: an encoding process of encoding the content data, to thereby form a data block including the encoded content data; a first recording process of recording the data block formed in the encoding process, into a recording area of a first layer of the dual-layer recording disk; a judging process of judging whether the data block is recorded in the first recording process up to near a tail position of the recording area of the first layer; a tail area recording process of performing a tail area recording method in accordance with the judgment of the judging process; a layer changing process of changing a recording area into which the data block formed in the encoding process is to be recorded, from the recording area of the first layer to a recording area of a second layer of the dual-layer recording disk; and a second recording process of recording the data block formed in the encoding process, into the recording area of the second, the tail area recording method provided with: a special data block forming process of forming a special data block by using the content data on which an encoding process is performed to form the data block to be recorded next, when the judgment is performed in the judging process or when a judgment result in the judging process is sent to an encoding device which performs the encoding process in the encoding process, or at about this time point; a special data block recording process of recording the special data block formed in the special data block forming process, into an unrecorded area in a tail area of the recording area of the first layer, following the data block which is already recorded immediately before the unrecorded area; and a dummy data recording process of recording dummy data into the unrecorded area in the tail area of the recording area of the first layer after the special data block is recorded in the special data block recording process, the recording of the special data block in the special data block recording process and the recording of the dummy data in the dummy data recording process are performed in real time continuously.

The above object of the present invention can be also achieved by each of first to fourth computer programs for making a computer function as respective one of the first to fourth recording apparatus of the present invention (including its own various aspects).

The above object of the present invention can be also achieved by each of first to fourth computer program products in a computer-readable medium for tangibly embodying a program of instructions executable by a computer, to make the computer function as respective one of the first to fourth recording apparatuses of the present invention (including its various aspects).

According to each of the computer program products of the present invention, the aforementioned first to fourth recording apparatuses of the present invention can be embodied relatively readily, by loading the computer program product from a recording medium for storing the computer program product, such as a ROM (Read Only Memory), a CD-ROM (Compact Disc - Read Only Memory), a DVD-ROM (DVD Read Only Memory), a hard disk or the like, into the computer, or by downloading the computer program product, which may be a carrier wave, into the computer via a communication device. More specifically, each of the computer program products may include computer readable codes to cause the computer (or may comprise computer readable instructions for causing the computer) to function as respective one of the aforementioned first to fourth recording apparatuses of the present invention.

These effects and other advantages of the present invention will become more apparent from the following embodiments.

Brief Description of Drawings

[FIG. 1] FIG. 1 is a block diagram showing a recording / reproducing apparatus in a first embodiment of the present invention.
[FIG. 2] FIG. 2 is a flowchart showing a real-time recording process by the recording / reproducing apparatus in FIG. 1.
[FIG. 3] FIG. 3 is an explanatory diagram showing a recording state of a dual-layer write-once type DVD in the real-time recording in FIG. 2.
[FIG. 4] FIG. 4 is a block diagram showing a recording / reproducing apparatus in a second embodiment of the present invention.
[FIG. 5] FIG. 5 is a flowchart showing a real-time recording process by the recording / reproducing apparatus in FIG. 4.
[FIG. 6] FIG. 6 is an explanatory diagram showing a recording state of the dual-layer write-once type DVD in the real-time recording in FIG. 5.
[FIG. 7] FIG. 7 is a block diagram showing a recording / reproducing apparatus in a third embodiment of the present invention.
[FIG. 8] FIG. 8 is a flowchart showing a real-time recording process by the recording / reproducing apparatus in FIG. 7.
[FIG. 9] FIG. 9 is an explanatory diagram showing a recording state of the dual-layer write-once type DVD in the real-time recording in FIG. 8.
[FIG. 10] FIG. 10 is an explanatory diagram showing a cell dividing process in the real-time recording in FIG. 8.
[FIG. 11] FIG. 11 is a block diagram showing a recording / reproducing apparatus in a fourth embodiment of the present invention.
[FIG. 12] FIG. 12 is a flowchart showing a real-time recording process by the recording / reproducing apparatus in FIG. 11.
[FIG. 13] FIG. 13 is an explanatory diagram showing a recording state of the dual-layer write-once type DVD in the real-time recording in FIG. 12.

Description of Reference Codes

1, 2, 3, 4 recording / reproducing apparatus (or recording apparatus)
10 dual-layer write-once type DVD (or dual-layer recording disk)
16, 17, 61, 62 encoder (or encoding device)
16A, 17A, 18A buffer memory
61B, 62B memory (or memory device)
18 VOB formation device (or encoding device, dummy data generating device, dividing / recording device)
19 recording control device (or recording device, layer changing device, dummy data recording device, are ensuring device, dividing / recording device)
30, 63, 81, 111 system control device (or encoding device, recording device, layer changing device, recording start position setting device, judging device)

Best Mode for Carrying Out the Invention

Hereinafter, the best mode for carrying out the present invention will be explained in each embodiment in order with reference to the drawings.

(First Embodiment)

The first embodiment of the present invention will be explained. FIG. 1 shows the structure of a recording / reproducing apparatus in a first embodiment of the recording apparatus and the recording method of the present invention. A recording / reproducing apparatus 1 in FIG. 1 can record content data in real time over a first layer and a second layer of a single-sided dual-layer write-once type DVD 10.

With regard to the recording / reproducing apparatus 1 in FIG. 1, the structure and the operation regarding the recording of the content data are as follows. A TV broadcast station transmits an analog video signal and an analog audio signal. A TV reception device 11 receives the video signal and the audio signal, which are transmitted from the TV broadcast station. The video signal and the audio signal are supplied to A/D converters 14 and 15 through input selector switches 12 and 13, and are converted to a digital video signal and a digital audio signal by the A/D converters 14 and 15, respectively. Then, a video encoder 16 encodes the video signal on the basis of the DVD video standard. The video encoder 16 is provided with a buffer memory 16A for a video encoding process. If the encoding process is performed by the video encoder 16, the video signal is temporarily stored in the buffer memory 16A, and the encoding process is performed on the video signal stored in the buffer memory 16A. Moreover, an audio encoder 17 encodes the audio signal. The audio encoder 17 is provided with a buffer memory 17A for an audio encoding process. If the encoding process is performed by the audio encoder 17, the audio signal is temporarily stored in the buffer memory 17A, and the encoding process is performed on the audio signal stored in the buffer memory 17A. The encoded video signal and audio signal are supplied to a VOB formation device 18. The VOB formation device 18 combines the encoded video signal and the encoded audio signal, to thereby form a VOB. The VOB formation device 18 is formed of, e.g., an arithmetic processing circuit, a multiplexer, and the like. Moreover, the VOB formation device 18 is provided with a buffer memory 18A for a VOB formation process. If the VOB formation process is performed by the VOB formation device 18, the encoded video signal and the encoded audio signal are temporarily stored in the buffer memory 18A for the VOB formation process, and the VOB formation process is performed on the video signal and the audio signal stored in the buffer memory18. The VOB formed by the VOB formation device 18 is supplied to a recording control device 19. Then, the recording control device 19 controls a pickup 20 and records the VOB onto the dual-layer write-once type DVD 10. The recording control device 19 is formed of, e.g., an arithmetic processing circuit, a memory element, and the like. Incidentally, the recording / reproducing apparatus 1 can record a video signal and an audio signal, which are filmed and recorded by e.g. a video camera, onto the dual-layer write-once type DVD 10 through external input terminals 9 and 10.

On the other hand, with regard to the recording / reproducing apparatus 1, the structure and the operation regarding the reproduction of the content data are as follows. The content data recorded on the dual-layer write-once type DVD 10 is read by the pickup 20, under the control of a reproduction control device 21, and is supplied to a demultiplexer 23 through a selector switch 22. The content data is divided into the video signal and the audio signal by the demultiplexer 23. The video signal is decoded by a video decoder 24, and the audio signal is decoded by an audio decoder 25. The decoded video signal and the decoded audio signal are supplied to D/A converters 28 and 29 through selector switches 26 and 27, are converted to an analog video signal and an analog audio signal by the D/A converters 28 and 29, and are outputted through output terminal 34 and 35, respectively.

Incidentally, in such an operation of the recording / reproducing apparatus 1, all of the analog video signal and audio signal, the digital video signal and audio signal, and the encoded video signal and audio signal, correspond to the content data. Moreover, the encoding process of the recording / reproducing apparatus 1 includes not only the encoding process performed on the video signal by the video encoder 16 and the encoding process performed on the audio signal by the audio encoder 17, but also the VOB formation process by the VOB formation device 18.

A system control device 30 controls each of the constituent elements of the recording / reproducing apparatus 1, such as the TV reception device 11, the A/D converters 14 and 15, the encoders 16 and 17, the VOB formation device 18, and the decoders 24 and 25. Specifically, the system control device 30 controls the encoders 16 and 17, the VOB formation device 18, and the recording control device 19, to thereby perform a real-time recording process of recording the content data on the dual-layer write-once type DVD 10. The system control device 30 is formed of, e.g., an arithmetic processing apparatus, a memory element, and the like. Moreover, the recording / reproducing apparatus 1 is provided with: a memory device 31; a display device 32; and an operation device 33.

FIG. 2 shows the content of the real-time recording process of recording the content data on the dual-layer write-once type DVD 10, by the recording / reproducing apparatus 1. FIG. 3 shows a state that the content data or the like is recorded on the dual-layer write-once type DVD 10 in the real-time recording process. Specifically, FIG. 3 shows the recording state of the dual-layer write-once type DVD 10 before a finalize process is performed. Moreover, FIG. 3 shows spiral tracks, formed in the first layer and the second layer of the dual-layer write-once type DVD 10, in such a state that the tracks are linearly elongated from side to side. In each drawing, the lower part is the first layer (layer 0), and the upper part is the second layer (layer 1).

As shown in FIG. 3, the dual-layer write-once type DVD 10 has two recording layers: i.e. the first layer and the second layer. The innermost portion of the first layer is a lead-in area 41, and the outermost portion of the first layer is a middle area 42. In the first layer, there is a recording area 43 between the lead-in area 41 and the middle area 42. The content data, management information (including control information), such as a cell or VOB (Video Object), management information (including control information), such as a VTS (Video Title Set), and the like are recorded in the recording area 43. Moreover, the outermost portion of the second layer is a middle area 44, and the innermost portion of the second layer is a lead-out area 44. In the second layer, there is a recording area 46 between the middle area 44 and the lead-out area 45. The content data, the management information, such as a cell or VOB, the management information, such as a VTS, and the like are also recorded in the recording area 46. If the dual-layer write-once type DVD 10 is unrecorded, the recording of the content data or the like into the recording area 43 of the first layer on the dual-layer write-once type DVD 10 is progressed from a head position P1 to a tail position P6. Moreover, the recording of the content data or the like into the recording area 46 of the second layer on the dual-layer write-once type DVD 10 is progressed from a head position P7 to a tail position P8. Moreover, the recording of the content data onto the dual-layer write-once type DVD 10 is progressed, normally from the first layer to the second layer.

Now, with reference to FIG. 2 and FIG. 3, the real-time recording process of the recording / reproducing apparatus 1 is explained. The recording / reproducing apparatus 1 in the first embodiment records the content data in real time over the first layer and the second layer, without recording a dummy cell in a tail area of the recording area 43 of the first layer, by setting the VOB fixed-length and by adjusting a recording start position of the VOB in the recording area 43 of the first layer. Incidentally, in the explanation below, the case that the VOB is provided with one cell and the encoding process and the recording process are performed on each one VOB is exemplified. Moreover, the case that the content data is additionally recorded (or written once) onto the dual-layer write-once type DVD 10 on which the content data was recorded once in the past and thus one VTS 51 is already recorded in the recording area 43 of the first layer is also exemplified. Moreover, it is assumed that the amount (or length) of the content data which is additionally recorded (or written once) is greater than the length of an unrecorded area R1 (refer to FIG. 3) in the recording area 43 of the first layer of the dual-layer write-once type DVD 10 at a recording start time point. Thus, if it is tried to record the content data onto the dual-layer write-once type DVD 10, the content data is likely recorded over the first layer and the second layer. Moreover, in FIG. 3, a reserved area 52 between the head position P1 to a position P2 in the recording area 43 of the first layer is an area to record therein disk information (e.g. UDF and VMG (Video Manager)) in the finalize process, and it was ensured when the VTS 51 was recorded in the past.

Firstly, in such a condition that the dual-layer write-once type DVD 10 is loaded in a disk loading portion (not illustrated) of the recording / reproducing apparatus 1, the video signal and the audio signal, which are transmitted from the TV broadcast station, are received by the TV reception device 11, or the video signal and the audio signal, which are outputted from the video camera, are inputted to the recording / reproducing apparatus 1 through the external input terminals 9 and 10. Then, for example, a user presses a recording start button (not illustrated) mounted on the operation device 33. By this, a recording start command is issued from the system control device 30. In response to this, the system control device 30 and the recording control device 19 start the real-time recording process of recording the content data (step S1 in FIG. 2). Since the VTS 51 is already recorded on the dual-layer write-once type DVD 10, the real-time recording of the content data is started from a position P3, which follows an area in which the VTS 51 is recorded, in the recording area 43 of the first layer.

Then, the system control device 30 calculates a length L1 of the unrecorded area R1 in the recording area 43 of the first layer (step S2). That is, the system control device 30 calculates the length L1 of the unrecorded area R1 which continuously exists between the position P3 and the tail position P6 of the recording area 43, wherein the position P3 follows the area in which the information or data (VTS 51) is already recorded in the recording area 43 before the real-time recording process is started. The calculation can be performed by calculating a difference between the address of a tail position of the information or data, which is already recorded in the recording area 43, and the address of the tail position P6 of the recording area 43. Incidentally, if the real-time recording is performed on the unrecorded dual-layer write-once type DVD, the system control device 30 calculates the length of an unrecorded area which continuously exists between the head position P1 of the recording area 43 of the first layer and the tail position P6 of the recording area 43, in the step S2.

Then, the system control device 30 determines a length L2 of the VOB (step S3). That is, the system control device 30 calculates the amount of the data (or content data and management information) which forms one cell in accordance with a recording mode specified by a user. Since the VOB is provided with one cell in the embodiment, the amount of the data, which forms one cell, corresponds to the length L2 of one VOB. Since the VOB is fixed-length in the first embodiment, the length L2 of all the VOBs which are formed in the real-time recording process in the first embodiment is the length that is determined in this step. Incidentally, the recording mode includes, for example, a normal mode and a fine mode, which have different recording pit rates of the content data. Thus, the amount of the data, which forms one cell, varies depending on the recording mode. A user can set the recording mode by operating a button on the operation device 33, for example.

Moreover, in the step S3, the system control device 30 determines the length L2 of the VOB such that the length L2 of the VOB is an integral multiple of the length of an ECC (Error Correction Code). For example, the system control device 30 determines the length of each VOBU (Video Object Unit), which constitutes one VOB, such that the length of each VOBU is an integral multiple of the length of the ECC block. The length of the VOBU can be adjusted, for example, by finely adjusting a recording bit rate of the content data or by inserting a private stream (or private packet), in the encoding process on the encoders 16 and 17 or in the VOB formation process on the VOB formation device 18. By setting the length L2 of the VOB to be an integral multiple of the length of the ECC block, ECC alignment can be performed at the tail position P6 of the recording area 43 of the firs layer.

After the length L2 of the VOB is determined, a system control device 30 controls the encoders 16 and 17 and the VOB formation device 18 so as to start the encoding process of the content data (or video signal and audio signal). By this, the content data, which is received by the TV reception device 11 or which is outputted from the video camera, is encoded, and the VOB including the encoded content data is formed.

Then, the system control device 30 determines a length L3 of a management information recording area 53 to record therein the management information about the VOB (e.g. VTSI (Video Title Set Information) and a recording start position P5 of the VOB (step S4). That is, the system control device 30 determines the recording start position P5 such that the length between the recording start position P5 and the tail position P6 of the recording area 43 is n times (n is an integer of 1 or more) as long as the length of the VOB, wherein the recording of the VOB is started in the recording area 43 of the first layer at the recording start position P5. Moreover, the system control device 30 ensures the management information recording area 53 between the head position P3 of the unrecorded area R1 in the recording area 43 of the first layer and immediately before the recording start position P5, and it adjusts the length L3 of the management information recording area 53, to thereby set the recording start position P5. Specifically, if a length of the management information to be recorded in the management information recording area 53 is L4, the system control device 30 calculates the length L3 of the management information recording area 53, on the basis of the length L1 of the unrecorded area R1, the length L2 of one VOB, and the length L4 of the management information, in accordance with an equation (1-1) and an equation (1-2).

$$L3 = L1 - L2 \times n \qquad (1\text{-}1)$$

$$L3 \geqq L4 \qquad (1\text{-}2)$$

Moreover, the system control device 30 adds the length L3 of the management information recording area 53 to the address of the head position P3 of the unrecorded area R1, to thereby calculate the recording start position P5 of the VOB.

Then, under the control of the system control device 30, the recording control device 19 ensures the management information recording area 53 between the head position P3 of the unrecorded area R1 in the recording area 43 of the first layer and the position immediately before the recording start position P5 (step S5).

Then, the recording control device 19 records the VOB, which is formed by the encoders 16 and 17 and the VOB formation device 18, into the recording area 43 of the first layer (step S6). The recording of the VOB into the recording area 43 is started from the recording start position P5. Moreover, the recording of the VOB into the recording area 43 of the first layer is continued until the recording of n VOBs is completed. The length between the recording start position P5 and the tail position P6 of the recording area 43 is n times as long as the length of the VOB. Therefore, when the recording of n VOBs is ended, the area between the recording start position P5 and the tail position P6 is filled with the n VOBs with no space.

Then, the system control device 30 or the recording control device 19 judges that the VOB is recorded up to the tail position P6 of the recording area 43 (step S7: YES), and then it changes the recording area in which the VOB is to be recorded, from the recording area 43 of the first layer to the recording area 46 of the second layer (step S8).

Then, the recording control device 19 records the VOB, which is formed by the encoders 16 and 17 and the VOB formation device 18, into the recording area 46 of the second layer (step S9). The recording of the VOB into the recording area 46 is started from the recording start position P7 of the recording area 46. Incidentally, a GOP (Group Of Picture(s)) in the beginning of the recording area 46 of the second layer is desirably a closed GOP. However, the GOP which is recorded in the head area of the recording area 46 may be an open GOP, and a broken link flag may be hung for the relevant GOP.

After that, a user presses a recording stop button (not illustrated) mounted on the operation device 33, for example. By this, a recording stop command is issued from the system control device 30 to the recording control device 19, and the recording of the VOB is stopped (step S10: YES).

Then, the recording control device 19 records the management information (e.g. VTSI) into the management information recording area 53. Moreover, the recording control device 19 records backup information about the management information (e.g. VTSI backup information) into an unrecorded area, which follows the area in which the last VOB is recorded, in the recording area 46 of the second layer (step S11). Incidentally, the management information and the backup information are generated by the encoders 16 and 17 and the VOB formation device 18 and are supplied to the recording control device 19. Moreover, since the length L3 of the management information recording area 53 is greater than the length L4 of the management information, if there is an unrecorded area (i.e. between a position P4 and immediately before the P5) left in the management information recording area 53, the recording control device 19 records data which does not influence the recording and reproduction (e.g. NULL data) into this unrecorded area.

After that, if a finalize process is performed on the dual-layer write-once type DVD 10, the disk information (e.g. UDF and VMG) is recorded into the reserved area 52 of the first layer, and if there is a remaining unrecorded area in a direction to the tail position P8 in the recording area 46 of the second layer, e.g. NULL data is recorded into this unrecorded area (step S12).

As explained above, the recording / reproducing apparatus 1 in the first embodiment determines the recording start position P5 such that the length between the recording start position P5 of the VOB in the recording area 43 of the first layer and the tail position P6 of the recording area 43 is an integral multiple of the length of the fixed-length VOB. By this, the area between the recording start position P5 and the tail position P6 can be filled with the n VOBs with no space by recording the n VOBs into the area between the recording start position P5 and the tail position P6. Moreover, the tail position P6 of the recording area 43 can be matched with the tail position of the VOB which is recorded last in the recording area 43. Therefore, it is possible to prevent the cell from being recorded over the first layer and the second layer. Moreover, it is also possible to prevent the unrecorded area from being left in the tail portion of the recording area 43 of the first layer when a finalize process is performed. Thus, it is possible to record the content data in real time over the first layer and the second layer of the dual-layer write-once type DVD 10 in compliance with the DVD video standard.

Moreover, according to the recording / reproducing apparatus 1 in the first embodiment, the VOB can be recorded up to the tail position P6 of the recording area 43 of the first layer. Thus, it is possible to prevent that nothing is displayed on a screen immediately before a layer change, a noise is displayed on the screen, or no sound is produced, when the content data is reproduced.

Moreover, according to the recording / reproducing apparatus 1 in the first embodiment, since it is possible to comply with the DVD standard, it is possible to provide compatibility with competitors' products with regard to the recording and reproduction of the content data.

Moreover, the recording / reproducing apparatus 1 ensures the management information recording area 53, which is to record therein the management information about the VOB (e.g. VTSI), between the head position P3 of the unrecorded area R1 in the recording area 43 of the first layer and immediately before the recording start position P5, and it adjusts the length of the management information recording area 53, to thereby set the recording start position P5. By this, it is possible to adjust the recording start position P5 of the VOB in compliance with the DVD video standard.

Incidentally, the encoders 16 and 17 and the VOB formation device 18 in FIG. 1 are a specific example of the encoding device and the encoding process. Moreover, the step S4 in FIG. 2 is a specific example of the recording start position setting device and the recording start position setting process. The step S6 and the step S9 are a specific example of the recording device and the recording process. The step S8 is a specific example of the layer changing device and the layer changing process. Moreover, the VOB is a specific example of the data block.

(Second Embodiment)

The second embodiment of the present invention will be explained. Incidentally, in the second embodiment described below, the same constitutional elements as those in the first embodiment carry the same numerical references, and the explanation thereof will be omitted. FIG. 4 shows the structure of a recording / reproducing apparatus in a second embodiment of the recording apparatus and the recording method of the present invention. A recording / reproducing apparatus 2 in FIG. 4 can record the content data in real time over the first layer and the second layer of the dual-layer write-once type DVD 10. A video encoder 61 is provided with a buffer memory 61A and a memory 61B. The memory 61B stores material data for dummy about video images. In the same manner, an audio encoder 62 is provided with a buffer memory 62A and a memory 62B. The memory 62B stores material data for dummy about audio. The memories 61B and 62B are, for example, ROM (Read Only Memory). The encoding process function of the encoders 61 and 62 and the buffer memories 61A and 62A are the same as that of the encoders 16 and 17 and the buffer memories 16A and 17A. A system control device 63 controls each of the constituent elements of the recording / reproducing apparatus 2. Specifically, the system control device 63 controls the encoders 61 and 62, the VOB formation device 18, and the recording control device 19, to thereby perform the real-time recording process of recording the content data onto the dual-layer write-once type DVD 10. The system control device 63 can be formed of, e.g., an arithmetic processing apparatus, a memory element, and the like.

FIG. 5 shows the content of the real-time recording process of recording the content data on the dual-layer write-once type DVD 10, by the recording / reproducing apparatus 2. FIG. 6 shows a state that the content data or the like is recorded on the dual-layer write-once type DVD 10 in the real-time recording process. Specifically, FIG.6 shows the recording state of the dual-layer write-once type DVD 10 before a finalize process is performed, in the same expression method as that in FIG. 3.

Now, with reference to FIG. 5 and FIG. 6, the real-time recording process of the recording / reproducing apparatus 2 in the second embodiment is explained. The recording / reproducing apparatus 2 records the content data in real time over the first layer and the second layer, by setting the VOB fixed-length and by recording a dummy cell into the tail area of the recording area 43 of the first layer. Incidentally, in the explanation below, the case that the VOB is provided with one cell and the encoding process and the recording process are performed on each one VOB is exemplified. Moreover, the case that the content data is additionally recorded (or written once) onto the dual-layer write-once type DVD 10 on which the content data was recorded once in the past and thus one VTS 51 is already recorded in the recording area 43 of the first layer is also exemplified. Moreover, it is assumed that the amount (or length) of the content data which is additionally recorded (or written once) is greater than the length of an unrecorded area R2 (refer to FIG. 6) in the recording area 43 of the first layer of the dual-layer write-once type DVD 10 at a recording start time point.

Firstly, in such a condition that the dual-layer write-once type DVD 10 is loaded in a disk loading portion (not illustrated) of the recording / reproducing apparatus 2, the video signal and the audio signal, which are transmitted from the TV broadcast station, are received by the TV reception device 11, or the video signal and the audio signal, which are outputted from the video camera, are inputted to the recording / reproducing apparatus 2 through the external input terminals 9 and 10. Then, for example, a user presses a recording start button (not illustrated) mounted on the operation device 33. By this, a recording start command is issued from the system control device 63. In response to this, the system control device 63 and the recording control device 19 start the real-time recording process of recording the content data (step S21 in FIG. 5). Since the VTS 51 is already recorded on the dual-layer write-once type DVD 10, the real-time recording of the content data is started from the position P3, which follows an area in which the VTS 51 is recorded, in the recording area 43 of the first layer.

Then, under the control of the system control device 63, the recording control device 19 ensures a management information recording area 71 from the position P3 in the recording area 43 (step S22). The management information recording area 71 is an area to record therein the management information about the VOB (e.g. VTSI). The length of the management information recording area 71 is set to substantially match the length of the management information recorded here.

Then, the system control device 63 calculates a length L11 of the unrecorded area R2 in the recording area 43 of the first layer (step S23). That is, the system control device 63 calculates the length L11 of the unrecorded area R2 which continuously exists between a position P11, which follows the management information recording area 71 and the tail position P6 of the recording area 43, immediately after the management information recording area 71 is ensured. The calculation can be performed by calculating a difference between the address of the position immediately before the position P11 and the address of the position P6.

Then, the system control device 63 determines a length L12 of the VOB (step S24). That is, the system control device 63 calculates the amount of the data (or content data and management information) which forms one cell in accordance with a recording mode specified by a user. Since the VOB is provided with one cell in the embodiment, the amount of the data which forms one cell corresponds to the length L12 of one VOB. Since the VOB is fixed-length in the second embodiment, the length L12 of all the VOBs, which are formed in the real-time recording process in the second embodiment, is the length that is determined in this step.

After the length L12 of the VOB is determined, the system control device 63 controls the encoders 61 and 62 and the VOB formation device 18 so as to start the encoding process of the content data (or video signal and audio signal). By this, the content data, which is received by the TV reception device 11 or which is outputted from the video camera, is encoded, and the VOB including the encoded content data is formed.

Then, the system control device 63 determines a reference value $V_r$ (step S25). That is, in the real-time recording process on the recording / reproducing apparatus 2, the VOB is recorded into the recording area 43 until the length of an unrecorded area which exists in the tail area of the recording area 43 of the first layer becomes less than the length of one VOB. The reference value $V_r$ is a reference value to judge whether or not the VOB is recorded into the recording area 43 until the length of an unrecorded area which exists in the tail area of the recording area 43 of the first layer becomes less than the length of one VOB. Specifically, the reference value $V_r$ is desirably a length (or data amount) obtained by subtracting the length of one or more VOBs (one or more cells) from the length L11 of the unrecorded area R2. More specifically, the reference value $V_r$ is desirably a length obtained by subtracting such a length that is obtained by adding the length of one VOB (one cell) and the length of one to several ECC blocks, from the length L11 of the unrecorded area R2. That is, if the length of one ECC block is L3, the reference value $V_r$ is preferably calculated in accordance with an equation (2).

$$V_r = L11 - (L12 + L13 \times m) \qquad (2)$$

Incidentally, m is an integer which is equal to or more than 1 and which is less than 10

A position P12 in FIG. 6 indicates a position in the recording area 43 corresponding to the reference value $V_r$.

Then, the recording control device 19 records the VOB, which is formed by the encoders 61 and 62 and the VOB formation device 18, into the recording area 43 of the first layer (step S26). The recording of the VOB into the recording area 43 is started from the recording start position P11. Moreover, the recording of the VOB into the recording area 43 of the first layer is continued until the length of the unrecorded area which exists in the tail area of the recording area 43 becomes less than the length L12 of one VOB.

Then, the system control device 63 judges whether or not the VOB is recorded into the recording area 43 until the length of the unrecorded area which exists in the tail area of the recording area 43 becomes less than the length L12 of one VOB. This judgment is performed by the following method, for example. That is, while the real-time recording process is performed on the recording area 43 of the first layer, the system control device 63 integrates the amount of the content data, which is encoded to perform the recording into the recording are 43 by the real-time recording process, and the amount of the management information added to the content data, and it holds an integrated value $v_a$ which indicates the above. That is, the integrated value $v_a$ is equal to a value obtained by adding a total length of one or more VOBs, which are already recorded in the unrecorded area R2 by the recording control device 19, and a total length of the management information and the content data, which are currently stored in the buffer memory 18A after the controlling process in order to form the VOB which will be recorded next. The integrated value $v_a$ increases in response to the progress of the encoding process (including the VOB formation process) performed by the encoders 61 and 62 and the VOB formation device 18. Moreover, the system control device 63 compares the integrated value $v_a$ with the reference value $V_r$ while performing the real-time recording process on the recording area 43 of the first layer. Then, when the integrated value $v_a$ exceeds the reference value $V_r$, the system control device 63 judges that the VOB is recorded into the recording area 43 until the length of the unrecorded area which exists in the tail area of the recording area 43 becomes less than the length L12 of one VOB (step S27).

When the integrated value $v_a$ exceeds the reference value $V_r$, i.e. when the VOB is recorded into the recording area 43 until the length of the unrecorded area which exists in the tail area of the recording area 43 becomes less than the length L12 of one VOB (the step S27: YES), the encoders 61 and 62 and the VOB formation device 18 perform ECC alignment by adjusting the length of the last VOBU in the VOB which is to be recorded last in the recording area 43 of the first layer, under the control of the system control device 63. Then, the recording control device 19 records the VOB which is to be recorded last in the recording area 43 of the first layer, into the recording area 43 (step S28). By this, the VOB is recorded up to immediately before a position P13 in the tail area of the recording area 43. Incidentally, the length of the VOBU can be adjusted by inserting a private stream (or private packet) into the VOBU.

Then, the system control device 63 changes the recording area in which the VOB is to be recorded, from the recording area 43 of the first layer to the recording area 46 of the second layer (step S29). The layer change is performed when the VOB is recorded up to immediately before the position P13 in the recording area 43 of the first layer. As a result, an unrecorded area 72 is formed between the position P13 and the tail position P6 in the tail area of the recording area 43 of the first layer.

Then, the recording control device 19 ensures a recording position adjustment area 73 in the head portion of the recording area 46 of the second layer (step S30). That is, the recording control device 19 ensures the recording position adjustment area 73 between the head position P7 of the recording area 46 and immediately before a position P14. The recording position adjustment area 73 has substantially the same length as that of the unrecorded area 72. In the recording position adjustment area 73, the content data to be actually reproduced and the management information thereof are not recorded, but dummy data is recorded later. Ensuring the recording position adjustment area 73 allows the following effects to be obtained. That is, on the dual-layer write-once type DVD, the recording sometimes becomes unstable if the data is recorded into an unrecorded area in the second layer, which overlaps an unrecorded area in the first layer, with the unrecorded area left in the first layer. Therefore, it is possible to prevent that the recording of the content data to be actually reproduced and the management information becomes unstable, by forming the recording position adjustment area 73 in the area that substantially overlaps the unrecorded area 72 in the recording area 43 of the first layer, in the recording area 46 of the second layer, and by not recording the content data to be actually reproduced and the management information in this area.

Then, the recording control device 19 records the VOB, which is formed by the encoders 61 and 62 and the VOB formation device 18, into the recording area 46 of the second layer (step S31). The recording of the VOB into the recording area 46 is started from a head position P14 of the recording area 46. Incidentally, the GOP (Group Of Picture (s)) in the beginning of the recording area 46 of the second layer is desirably a closed GOP. However, the GOP which is recorded in the head area of the recording area 46 may be an open GOP, and a broken link flag may be hung for the relevant GOP.

After that, a user presses a recording stop button (not illustrated) mounted on the operation device 33, for example. By this, a recording stop command is issued from the system control device 63 to the recording control device 19, and the recording of the VOB is stopped (step S32: YES).

Then, the recording control device 19 records the management information (e.g. VTSI) into the management information recording area 71. Moreover, the recording control device 19 records backup information about the management information (e.g. VTSI backup information) into an unrecorded area which follows the area in which the last VOB is recorded, in the recording area 46 of the second layer (step S33). Incidentally, the management information and the backup information are generated by the encoders 61 and 62 and the VOB formation device 18 and are supplied to the recording control device 19.

After the real-time recording is performed on a series of the content data to be recorded into the recording are 43 of the first layer and the recording area 46 of the second layer, the recording control device 19 records dummy data into the unrecorded area 72 and the recording position adjustment area 73 (step S34). Incidentally, when the dummy data is recorded, it is tried not to insert useless data near the position P13 by using zero link as a linking method.

The dummy data is video data or audio data having the same attribute as that of video data (or video pack) or audio data (or audio pack), which is the content data recorded on the dual-layer write-once type DVD 10 in the real-time recording process. For example, the dummy data is video data which makes an entire screen black or audio data which has no sound if they are reproduced, or the like. Moreover, the dummy data is generated to form one cell (so-called dummy cell) in each of the unrecorded area 72 and the recording position adjustment area 73. Incidentally, the dummy data recorded in the unrecorded area 72 and the recording position adjustment area 73 is constructed not to be referred to by a PGC (Program Chain).

Moreover, the dummy data is generated by the encoders 61 and 62 and the VOB formation device 18 by using material data for dummy, which is stored in each of the memories 61B and 62B which are provided for the encoders 61 and 62, respectively. The material data for dummy is video data or audio data having the same attribute as that of video data or audio data, which is the content data recorded on the dual-layer write-once type DVD 10 in the real-time recording process. For example, the material data for dummy is video data which makes an entire screen black or audio data which has no sound if they are reproduced, or the like, and it is data to which an appropriate SCR (System Clock Reference) or the like is not appended. The encoders 61 and 62 and the VOB formation device 18 append the appropriate SCR or the like to the material data for dummy, to thereby generate the dummy data. Incidentally, as a method of memory-holding the material data for dummy, the method in which the video data and the audio data are stored in the different memories 61A and 61B, as in the embodiment, may be employed. In contrast, the employed method may be a method in which stream data in which the video data and the audio data are multiplexed is stored into one memory. For example, the employed method may be a method in which a ROM is added on the VOB formation device 18 and the stream data is stored in the added ROM.

After that, if a finalize process is performed on the dual-layer write-once type DVD 10, the disk information (e.g. UDF and VMG) is recorded into the reserved area 52 of the first layer, and if there is a remaining unrecorded area in a direction to the tail position P8 in the recording area 46 of the second layer, e.g. NULL data is recorded into this unrecorded area (step S35).

As explained above, the recording / reproducing apparatus 2 in the second embodiment records the VOB until the length of the unrecorded area which exists in the tail area of the recording area 43 of the first layer becomes less than the length L 12 of one VOB. After that the recording / reproducing apparatus 2 records the dummy data into the unrecorded area 72 and the recording position adjustment area 73, to thereby fill the unrecorded area 72 and the recording position adjustment area 73 with the dummy data. Moreover, the recording / reproducing apparatus 2 forms the dummy cell in the unrecorded area 72 and the recording position adjustment area 73, by using the video data or audio data having the same attribute as that of video data or audio data, which is the content data recorded on the dual-layer write-once type DVD 10 in the real-time recording process, as the dummy data. By this, it is possible to prevent the cell from being recorded over the first layer and the second layer. Moreover, it is also possible to prevent the unrecorded area from being left in the tail portion of the recording area 43 of the first layer when a finalize process is performed. Thus, it is possible to record the content data in real time over the first layer and the second layer of the dual-layer write-once type DVD 10 in compliance with the DVD video standard.

Moreover, according to the recording / reproducing apparatus 2 in the second embodiment, the VOB can be recorded up to the tail position P6 of the recording area 43 of the first layer. Thus, it is possible to prevent that nothing is displayed on a screen immediately before a layer change, a noise is displayed on the screen, or no sound is produced, when the content data is reproduced.

Moreover, according to the recording / reproducing apparatus 2 in the second embodiment, since it is possible to comply with the DVD standard, it is possible to provide compatibility with competitors' products with regard to the recording and reproduction of the content data.

Incidentally, in the real-time recording process by the recording / reproducing apparatus 2 described above, the VOB is set fixed-length, but the VOB may be variable-length. If the VOB is set variable-length, the fixed-length L12 of the VOB is replaced by the maximum length of the VOB, and the reference V is set by the equation (2).

Moreover, in the real-time recording process by the recording / reproducing apparatus 2 described above, the recording position adjustment area 73 is formed. This is performed in view of the case that the recording becomes unstable if the data is recorded into an unrecorded area in the second layer, which overlaps an unrecorded area in the first layer, with the unrecorded area left in the first layer. Therefore, the recording position adjustment area 73 does not have to be formed in the case that it is possible to ensure the stable recording to the extent that the reproduction is not influenced even if the data is recorded into the unrecorded area of the second layer which overlaps the unrecorded area of the first layer. In this case, the VOB is recorded from the head position P7 of the recording area 46 of the second layer.

Moreover, in the real-time recording process by the recording / reproducing apparatus 2 described above, the following case is exemplified: the memories 61B and 62B are provided, the material data for dummy is stored in these memories, and the dummy data is generated by using the material data for dummy. The present invention, however, is not limited to this. For example, after the real-time recording is ended on a series of the content data to be recorded into the recording are 43 of the first layer and the recording area 46 of the second layer, the dummy data may be generated by using the content data which remains in the buffer memories 61A and 62A of the encoders 61 and 62 or the buffer memory 18A of the VOB formation device 18. By this, it is possible to eliminate the memories 61B and 62B, and to reduce the number of the parts of the recording / reproducing apparatus 2.

Moreover, the encoders 61 and 62 and the VOB formation device 18 in FIG. 4 are a specific example of the encoding device and the encoding process. Moreover, the step S26, the step S28, and the step S31 in FIG. 5 are a specific example of the recording device. Moreover, the step S26 and the step S28 are a specific example of the first recording process, and the step S31 is a specific example of the second recording process. Moreover, the step S29 is a specific example of the layer changing device and the layer changing process, and the step S34 is a specific example of the dummy data recording device and the dummy data recording process. Moreover, the step S30 is a specific example of the area ensuring device, and the step S34 is a specific example of the dummy data generating device. Moreover, the VOB is a specific example of the data block.

(Third Embodiment)

The third embodiment of the present invention will be explained. Incidentally, in the third embodiment described below, the same constitutional elements as those in the first and second embodiments carry the same numerical references, and the explanation thereof will be omitted. FIG. 7 shows the structure of a recording / reproducing apparatus in a third embodiment of the recording apparatus and the recording method of the present invention. A recording / reproducing apparatus 3 in FIG. 7 can record the content data in real time over the first layer and the second layer of the dual-layer write-once type DVD 10. A system control device 81 controls each of the constituent elements of the recording / reproducing apparatus 3. Specifically, the system control device 81 controls the encoders 16 and 17, the VOB formation device 18, and the recording control device 19, to thereby perform the real-time recording process of recording the content data onto the dual-layer write-once type DVD 10. The system control device 81 can be formed of, e.g., an arithmetic processing apparatus, a memory element, and the like.

FIG. 8 shows the content of the real-time recording process of recording the content data on the dual-layer write-once type DVD 10, by the recording / reproducing apparatus 3. FIG. 9 shows a state that the content data or the like is recorded on the dual-layer write-once type DVD 10 in the real-time recording process. Specifically, FIG.9 shows the recording state of the dual-layer write-once type DVD 10 before a finalize process is performed, in the same expression method as that in FIG. 3.

Now, with reference to FIG. 8 and FIG. 9, the real-time recording process of the recording / reproducing apparatus 3 in the third embodiment is explained. The recording / reproducing apparatus 3 records the content data in real time over the first layer and the second layer, by setting the VOB variable-length and by performing cell-division to thereby not to record a dummy cell into the tail area of the recording area 43 of the first layer. Incidentally, in the explanation below, the case that the VOB is provided with one cell and the encoding process and the recording process are performed on each one VOB is exemplified. Moreover, the case that the content data is additionally recorded (or written once) onto the dual-layer write-once type DVD 10 on which the content data was recorded once in the past and thus one VTS 51 is already recorded in the recording area 43 of the first layer is also exemplified. Moreover, it is assumed that the amount (or length) of the content data which is additionally recorded (or written once) is greater than the length of an unrecorded area R3 (refer to FIG. 9) in the recording area 43 of the first layer of the dual-layer write-once type DVD 10 at a recording start time point.

Firstly, in such a condition that the dual-layer write-once type DVD 10 is loaded in a disk loading portion (not illustrated) of the recording / reproducing apparatus 3, the video signal and the audio signal, which are transmitted from the TV broadcast station, are received by the TV reception device 11, or the video signal and the audio signal, which are outputted from the video camera, are inputted to the recording / reproducing apparatus 3 through the external input terminals 9 and 10. Then, for example, a user presses a recording start button (not illustrated) mounted on the operation device 33. By this, a recording start command is issued from the system control device 81. In response to this, the system control device 81 and the recording control device 19 start the real-time recording process of recording the content data (step S41 in FIG. 7). Since the VTS 51 is already recorded on the dual-layer write-once type DVD 10, the real-time recording of the content data is started from a position P3, which follows an area in which the VTS 51 is recorded, in the recording area 43 of the first layer.

Then, under the control of the system control device 81, the recording control device 19 ensures a management information recording area 91 from the position P3 in the recording area 43 (step S42). The management information recording area 91 is an area to record therein the management information about the VOB (e.g. VTSI). The length of the management information recording area 91 is set to substantially match the length of the management information recorded here.

Then, the system control device 81 calculates a length L21 of the unrecorded area R3 in the recording area 43 of the first layer (step S43). That is, the system control device 81 calculates the length L21 of the unrecorded area R3 which continuously exists between a position P21 and the tail position P6 of the recording area 43, wherein the position P21 follows the management information recording area 91 immediately after the management information recording area 91 is ensured. The calculation can be performed by calculating a difference between the address of the position immediately before the position P21 and the address of the position P6.

Then, the system control device 81 controls the encoders 16 and 17 and the VOB formation device 18 so as to start the encoding process of the content data (or the video signal and audio signal) at a recording bit rate corresponding to a recording mode specified by a user (step S44). By this, the content data, which is received by the TV reception device 11 or which is outputted from the video camera, is encoded, and the VOB including the encoded content data is formed.

Then, the system control device 81 determines a reference value $V_r$ (step S45). That is, in the real-time recording process on the recording / reproducing apparatus 3, if one entire cell cannot be recorded into the unrecorded area in the recording area 43 of the first layer, the cell is divided by a cell dividing process, the former portion of the divided cell is recorded into the unrecorded area in the recording area 43, and the latter portion of the divided cell is recorded into the head area of the recording area 46 of the second layer. The reference value $V_r$ is a reference value to judge whether or not the cell dividing process is performed; namely, to judge whether or not one entire cell cannot be recorded into the unrecorded area in the recording area 43 of the first layer. Specifically, the reference value $V_r$ is desirably a length (or data amount) obtained by subtracting the maximum length of one or more VOBs (one or more cells) from the length L21 of the unrecorded area R3. More specifically, the reference value $V_r$ is desirably a length obtained by subtracting such a length that is obtained by adding the maximum length L22 of one cell and the length of several VOBUs, from the length L21 of the unrecorded area R3. That is, the reference value $V_r$ is preferably calculated in accordance with an equation (3).

$$V_r = L21 - (L22 + L23 \times m) \qquad (3)$$

Incidentally, m is an integer which is equal to or more than 1 and which is less than 10

A position P22 in FIG. 9 indicates a position in the recording area 43 corresponding to the reference value $V_r$.

Then, the recording control device 19 records the VOB, which is formed by the encoders 16 and 17 and the VOB formation device 18, into the recording area 43 of the first layer (step S46). The recording of the VOB into the recording area 43 is started from the recording start position P21. Moreover, the recording of the VOB into the recording area 43 of the first layer is continued until one entire cell cannot be recorded any more into the unrecorded area in the tail area of the recording area 43.

Then, the system control device 81 judges whether or not one entire cell cannot be recorded any more into the unrecorded area in the tail area of the recording area 43. This judgment is performed by the following method, for example. That is, while the real-time recording process is performed on the recording area 43 of the first layer, the system control device 81 integrates the amount of the content data, which is encoded to perform the recording into the recording are 43 by the real-time recording process, and the amount of the management information added to the content data, and it holds an integrated value $v_a$ which indicates the above. That is, the integrated value $v_a$ is equal to a value obtained by adding a total length of one or more VOBs, which are already recorded in the unrecorded area R3 by the recording control device 19, and a total length of the management information and the content data, which are currently stored in the buffer memory 18A after the controlling process in order to form the VOB which will be recorded next. The integrated value $v_a$ increases in response to the progress of the encoding process (including the VOB formation process) performed by the encoders 16 and 17 and the VOB formation device 18. Moreover, the system control device 81 compares the integrated value $v_a$ with the reference value $V_r$ while performing the real-time recording process on the recording area 43 of the first layer. Then, when the integrated value $v_a$ exceeds the reference value $V_r$, the system control device 81 judges that one entire cell cannot be recorded any more into the unrecorded area in the tail area of the recording area 43 (step S47).

When the integrated value $v_a$ exceeds the reference value $V_r$, i.e. when one entire cell cannot be recorded any more into the unrecorded area in the tail area of the recording area 43 (the step S47: YES), the encoders 16 and 17 and the VOB formation device 18 perform closed-GOP-encoding on the content data which is to be included in the cell which is to be recorded from the tail area of the recording area 43 of the first layer to the head area of the recording area 46 of the second layer, under the control of the system control device 81. Moreover, the VOB formation device 18 performs the cell dividing process on the cell which is to be recorded from the tail area of the recording area 43 of the first layer to the head area of the recording area 46 of the second layer (step S48).

FIG. 10 shows the cell dividing process for the content data. In the buffer memory 18A of the multiplexer 18, there is stored the VOBU to be included in a cell 101 which is to be recorded from the tail area of the recording area 43 of the first layer to the head area of the recording area 46 of the second layer. A VOBU #1, illustrated on the right side of FIG. 10, is the VOBU that is disposed at the head of the cell 101. That is, if the cell 101 is recorded from the tail area of the recording area 43 of the first layer to the head area of the recording area 46 of the second layer, the recording is sequentially performed from the VOBU#1 on the right side to a VOBU#x on the left side. Moreover, a dashed line B1 extending in a longitudinal direction in FIG. 10 corresponds to a border line of the recording area 43 and the middle area 42 in the first layer. In other words, if the cell 101 is recorded in the recording area 43, a VOBU#j+1 above the dashed line B1 is recorded over the border line of the recording area 43 and the middle are 42 in the first layer (incidentally, in this case, since one portion of the VOBU#j+1 intrudes in the middle area 42, such recording is not performed, in reality). Moreover, a solid line B2 extending in the longitudinal direction in FIG. 10 corresponds to a dividing line. The cell 101, which is to be recorded from the tail area of the recording area 43 of the first layer to the head area of the recording area 46 of the second layer, is divided into the former portion and the latter portion by the cell dividing process, with the dividing line B2 on the boundary. Then, the former portion of the cell 101 is recorded into the tail area of the recording area 43 of the first layer, as a cell 102. The latter portion of the cell 101 is recorded into the head area of the recording area 46 of the second layer, as a cell 103.

Specifically, the cell dividing process is performed as follows. Firstly, the VOB formation device 18 calculates a length L25 between a position P23 and the tail position P6, wherein the position P23 follows the VOB that is recorded last in the recording area 43 of the first layer at this time. Then, the VOB formation device 18 integrates the length of the VOBU stored in the buffer memory 18A one by one from the VOBU#1 to the VOBU#x. When this integrated value exceeds the value of the length L25, the VOB formation device 18 stops the integration and specifies the VOBU#j+1, which is the last integrating target. By this, it is possible to specify the VOBU#j+1 corresponding to the border line (or dashed line B1) of the recording area 43 and the middle area 42 in the first layer. Then, the VOB formation device 18 sets the dividing line B2 between the VOBU#j+1 and the VOBU#j, and divides the cell 101 into the cell 102 and the cell 103 in accordance with the dividing line B2. Then, the VOB formation device 18 extracts the audio data, which is included in the cell 103 and which is the audio data that is to be synchronized with the video data included in the cell 102, from the cell 103, and puts it into the cell 102. Then, the VOB formation device 18 extracts the audio data which is included in the cell 102 and which is the audio data that is to be synchronized with the video data included in the cell 103, from the cell 102, and puts it into the cell 103. By changing the audio data between the cell 102 and the cell 103, if there is a significant change in the lengths of the cell 102 and the cell 103, the VOB formation device 18 performs again the aforementioned processes, i.e. the specification of the VOBU#j+1, the setting of the dividing line, the cell division, and the change of the audio data. Then, the VOB formation device 18 appends the appropriate SCR to the cell 102 and the cell 103, in view of after the division. Then, the VOB formation device 18 inserts the private packet or the like into the tail portion of the cell 102, to thereby perform the ECC alignment on the cell 102.

Then, the recording control device 19 records the former portion of the divided cell 101, i.e. the cell 102, into the tail area of the recording area 43 of the first layer (step S49). By this, the tail area of the recording area 43 is exactly filled with the cell 102. That is, after the recording of the cell 102 is performed, there is no more unrecorded area in the tail area of the recording area 43.

Then, the system control device 81 changes the recording area in which the VOB (or cell) is to be recorded, from the recording area 43 of the first layer to the recording area 46 of the second layer (step S80).

Then, the recording control device 19 records the latter portion of the divided cell 101, i.e. the cell 103, into the recording area 46 of the second layer, from the head position P7 (step S51).

Then, the recording control device 19 records the VOB, which is formed by the encoders 16 and 17 and the VOB formation device 18, into the recording area 46 of the second layer (step S52). The recording of the VOB into the recording area 46 is started from a position P24 which follows the area in which the cell 103 is recorded in the recording area 46.

After that, a user presses a recording stop button (not illustrated) mounted on the operation device 33, for example. By this, a recording stop command is issued from the system control device 81 to the recording control device 19, and the recording of the VOB is stopped (step S53: YES).

Then, the recording control device 19 records the management information (e.g. VTSI) into the management information recording area 91. Moreover, the recording control device 19 records backup information about the management information (e.g. VTSI backup information) into an unrecorded area which follows the area in which the last VOB is recorded in the recording area 46 of the second layer (step S54). Incidentally, the management information and the backup information are generated by the encoders 16 and 17 and the VOB formation device 18 and are supplied to the recording control device 19.

After that, if a finalize process is performed on the dual-layer write-once type DVD 10, the disk information (e.g. UDF and VMG) is recorded into the reserved area 52 of the first layer, and if there is a remaining unrecorded area in a direction to the tail position P8 in the recording area 46 of the second layer, e.g. NULL data is recorded into this unrecorded area (step S55).

As explained above, if the entire cell cannot be recorded into the unrecorded area in the tail area of the recording area 43 of the first layer, the recording / reproducing apparatus 3 in the third embodiment divides the cell, records the former portion of the divided cell into the unrecorded area in the recording area 43, and records the latter portion of the divided cell into the head area of the recording area of the second layer. By this, it is possible to prevent the cell from being recorded over the first layer and the second layer. Moreover, it is also possible to prevent the unrecorded area from being left in the tail portion of the recording area 43 of the first layer when a finalize process is performed. Thus, it is possible to record the content data in real time over the first layer and the second layer of the dual-layer write-once type DVD 10 in compliance with the DVD video standard.

Moreover, according to the recording / reproducing apparatus 3 in the third embodiment, the cell can be recorded up to the tail position P6 of the recording area 43 of the first layer. Thus, it is possible to prevent that nothing is displayed on a screen immediately before a layer change, a noise is displayed on the screen, or no sound is produced, when the content data is reproduced.

Moreover, according to the recording / reproducing apparatus 3 in the third embodiment, since it is possible to comply with the DVD standard, it is possible to provide compatibility with competitors' products with regard to the recording and reproduction of the content data.

Incidentally, in the real-time recording process on the recording / reproducing apparatus 3 described above, the following case is exemplified: the closed-GOP-encoding process is performed on the entire cell 101 that is to be recorded from the tail portion of the recording area 43 of the first layer to the head portion of the recording area 46 of the second layer. According to this, since the GOP that is recorded first in the recording area 46 of the second layer is the closed GOP, it is possible to prevent the video images from being lacked at the time of the reproduction of the GOP that is recorded first in the recording area 46 of the second layer. The present invention, however, is not limited to this. That is, an open GOP encoding process may be performed on the entire cell 101 that is to be recorded from the tail portion of the recording area 43 of the first layer to the head portion of the recording area 46 of the second layer. In this case, a broken link flag is hung for the GOP that is recorded first in the recording area 46 of the second layer. By this, it is possible to reduce the amount of the content data which is recorded onto the dual-layer write-once type DVD 10.

Moreover, the encoders 16 and 17 and the VOB formation device 18 in FIG. 7 are a specific example of the encoding device and the encoding process. Moreover, the step S46, the step S49, the step S51 and the step S62 in FIG. 8 are a specific example of the recording device and the recording process. Moreover, the step S44 is a specific example of the encoding process. Moreover, the step S50 is a specific example of the layer changing device.

(Fourth Embodiment)

The fourth embodiment of the present invention will be explained. Incidentally, in the fourth embodiment described below, the same constitutional elements as those in the first to third embodiments carry the same numerical references, and the explanation thereof will be omitted. FIG. 11 shows the structure of a recording / reproducing apparatus in a fourth embodiment of the recording apparatus and the recording method of the present invention. A recording / reproducing apparatus 4 in FIG. 11 can record the content data in real time over the first layer and the second layer of the dual-layer write-once type DVD 10. A system control device 111 controls each of the constituent elements of the recording / reproducing apparatus 4. Specifically, the system control device 111 controls the encoders 61 and 62, the VOB formation device 18, and the recording control device 19, to thereby perform the real-time recording process of recording the content data onto the dual-layer write-once type DVD 10. The system control device 111 can be formed of, e.g., an arithmetic processing apparatus, a memory element, and the like.

FIG. 12 shows the content of the real-time recording process of recording the content data on the dual-layer write-once type DVD 10, by the recording / reproducing apparatus 4. FIG. 13 shows a state that the content data or the like is recorded on the dual-layer write-once type DVD 10 in the real-time recording process. Specifically, FIG. 13 shows the recording state of the dual-layer write-once type DVD 10 before a finalize process is performed, in the same expression method as that in FIG. 3.

Now, with reference to FIG. 12 and FIG. 13, the real-time recording process of the recording / reproducing apparatus 4 in the fourth embodiment is explained. The recording / reproducing apparatus 4 records the content data in real time over the first layer and the second layer, by setting the VOB variable-length and by recording a dummy cell into the tail area of the recording area 43 of the first layer. Incidentally, in the explanation below, the case that the VOB is provided with one cell and the encoding process and the recording process are performed on each one VOB is exemplified. Moreover, the case that the content data is additionally recorded (or written once) onto the dual-layer write-once type DVD 10 on which the content data was recorded once in the past and thus one VTS 51 is already recorded in the recording area 43 of the first layer is also exemplified. Moreover, it is assumed that the amount (or length) of the content data which is additionally recorded (or written once) is greater than the length of an unrecorded area R4 (refer to FIG. 13) in the recording area 43 of the first layer of the dual-layer write-once type DVD 10 at a recording start time point.

Firstly, in such a condition that the dual-layer write-once type DVD 10 is loaded in a disk loading portion (not illustrated) of the recording / reproducing apparatus 4, the video signal and the audio signal, which are transmitted from the TV broadcast station, are received by the TV reception device 11, or the video signal and the audio signal, which are outputted from the video camera, are inputted to the recording / reproducing apparatus 4 through the external input terminals 9 and 10. Then, for example, a user presses a recording start button (not illustrated) mounted on the operation device 33. By this, a recording start command is issued from the system control device 111. In response to this, the system control device 111 and the recording control device 19 start the real-time recording process of recording the content data (step S61 in FIG. 12). Since the VTS 51 is already recorded on the dual-layer write-once type DVD 10, the real-time recording of the content data is started from the position P3, which follows an area in which the VTS 51 is recorded, in the recording area 43 of the first layer.

Then, under the control of the system control device 111, the recording control device 19 ensures a management information recording area 121 from the position P3 in the recording area 43 (step S62). The management information recording area 121 is an area to record therein the management information about the VOB (e.g. VTSI). The length of the management information recording area 121 is set to substantially match the length of the management information recorded here.

Then, the system control device 111 calculates a length L31 of the unrecorded area R4 in the recording area 43 of the first layer (step S63). That is, the system control device 111 calculates the length L31 of the unrecorded area R4 which continuously exists between a position P31 and the tail position P6 of the recording area 43, wherein the position P31 follows the management information recording area 121 immediately after the management information recording area 121 is ensured. The calculation can be performed by calculating a difference between the address of the position immediately before the position P31 and the address of the position P6.

Then, the system control device 111 controls the encoders 61 and 62 and the VOB formation device 18 so as to start the encoding process of the content data (or the video signal and audio signal) at a recording bit rate corresponding to a recording mode specified by a user (step S64). By this, the content data, which is received by the TV reception device 11 or which is outputted from the video camera, is encoded, and the VOB including the encoded content data is formed.

Then, the system control device 111 determines a reference value $V_r$ (step S65). That is, in the real-time recording process on the recording / reproducing apparatus 4, the VOB is recorded up to near the tail position P6 of the recording area 43 of the first layer. The reference value $V_r$ is a reference value to judge whether or not the VOB is recorded up to near the tail position P6 of the recording area 43 of the first layer. Specifically, the reference value $V_r$ is desirably a value obtained by subtracting the length of one VOB or a total length of several VOBs from the length L31 of the unrecorded area R4. That is, if the length of one VOBU is L32, the reference value $V_r$ is preferably calculated in accordance with an equation (4).

$$V_r = L31 - L32 \times k \qquad (4)$$

Incidentally, k is an integer which is equal to or more than 1 and which is less than 10
A position P32 in FIG. 13 indicates a position in the recording area 43 corresponding to the reference value $V_r$.

Then, the recording control device 19 records the VOB, which is formed by the encoders 61 and 62 and the VOB formation device 18, into the recording area 43 of the first layer (step S66). The recording of the VOB into the recording area 43 is started from the recording start position P31. Moreover, the recording of the VOB into the recording area 43 of the first layer is continued until the VOB is recorded up to near the tail position P6 of the recording area 43 of the first layer.

Then, the system control device 111 judges whether or not the VOB is recorded up to near the tail position P6 of the recording area 43 of the first layer. This judgment is performed by the following method, for example. That is, while the real-time recording process is performed on the recording area 43 of the first layer, the system control device 111 integrates the amount of the content data, which is encoded to perform the recording into the recording are 43 by the real-time recording process, and the amount of the management information added to the content data, and it holds an integrated value $v_a$ which indicates the above. That is, the integrated value $v_a$ is equal to a value obtained by adding a total length of one or more VOBs, which are already recorded in the unrecorded area R4 by the recording control device 19, and a total length of the management information and the content data, which are currently stored in the buffer memory 18A after the controlling process in order to form the VOB which will be recorded next. The integrated value $v_a$ increases in response to the progress of the encoding process (including the VOB formation process) performed by the encoders 61 and 62 and the VOB formation device 18. Moreover, the system control device 111 compares the integrated value $v_a$ with the reference value $V_r$ while performing the real-time recording process on the recording area 43 of the first layer. Then, when the integrated value $v_a$ exceeds the reference value $V_r$, the system control device 111 judges that the VOB is recorded up to near the tail position P6 of the recording area 43 of the first layer (step S67).

When the integrated value $v_a$ exceeds the reference value $V_r$, i.e. when the VOB is recorded up to near the tail position P6 of the recording area 43 of the first layer (the step S67: YES), the system control device 111 issues a command to close the cell, i.e. a cell close command, to the VOB formation device 18. In response to this, the VOB formation device 18 performs a cell close process (step S68).

The cell close process is a process of forming one VOB (or special VOB) by using the content data on which the encoding process (including the VOB formation process) is performed in order to form the VOB to be recorded next, when the judgment in the step S67 is performed or when the judgment result in the step S67 is set to the VOB formation device 18, or at about this time point. For example, when receiving the cell close command from the system control device 111, the VOB formation device 18 once stops the encoding process (including the VOB formation process) for forming the VOB to be recorded next, and forms one VOB by using the content data that is stored in the buffer memory 18A to form the VOB to be recorded next, at this time point when the encoding process is stopped. When one VOB is formed by the cell close process, all the audio data to be synchronized with the video data included in the VOB is introduced, and the ECC alignment is performed by inserting the private packet or the like into the tail portion of the VOB such that the length of the VOB is an integral multiple of the ECC block. The length of the VOB formed by the cell close process is sometime less than the normal length of the VOB, and for example, it is sometimes the VOB that includes only several VOBs.

Then, the recording control device 19 records the one VOB (or special VOB) formed by the cell close process, into an unrecorded area in the tail area of the recording area 43 of the first layer, following the VOB that is already recorded immediately before the unrecorded area (step S69). As a result, there is only an unrecorded area 122 left from a position P33, in the tail area of the recording area 43 of the first layer.

Then, the recording control device 19 records the dummy data into the unrecorded area 122 (step S70). The dummy data is video data or audio data having the same attribute as that of video data or audio data, which is the content data recorded on the dual-layer write-once type DVD 10 in the real-time recording process. For example, the dummy data is video data which makes an entire screen black or audio data which has no sound if they are reproduced, or the like. Moreover, the dummy data is generated to form one cell (so-called dummy cell) in the unrecorded area 122. Incidentally, the dummy data recorded in the unrecorded area 122 is constructed not to be referred to by a PGC (Program Chain). Moreover, as in the recording / reproducing apparatus 2 in the second embodiment, the dummy data is generated by the encoders 61 and 62 and the VOB formation device 18 by using the material data for dummy which is stored in each of the memories 61B and 62B which are provided for the encoders 61 and 62, respectively.

Then, the system control device 111 changes the recording area in which the VOB is to be recorded, from the recording area 43 of the first layer to the recording area 46 of the second layer (step S71).

Then, the recording control device 19 records the VOB, which is formed by the encoders 61 and 62 and the VOB formation device 18, into the recording area 46 of the second layer (step S72). The recording of the VOB into the recording area 46 is started from the head position P7 of the recording area 46. Incidentally, the GOP which is recorded first in the recording area 46 of the second layer is desirably a closed GOP. However, the GOP which is recorded in the head area of the recording area 46 may be an open GOP, and a broken link flag may be hung for the relevant GOP.

After that, a user presses a recording stop button (not illustrated) mounted on the operation device 33, for example. By this, a recording stop command is issued from the system control device 111 to the recording control device 19, and the recording of the VOB is stopped (step S73: YES).

Then, the recording control device 19 records the management information (e.g. VTSI) into the management information recording area 121. Moreover, the recording control device 19 records backup information about the management information (e.g. VTSI backup information) into an unrecorded area which follows the area in which the last VOB is recorded in the recording area 46 of the second layer (step S74). Incidentally, the management information and the backup information are generated by the encoders 61 and 62 and the VOB formation device 18 and are supplied to the recording control device 19.

After that, if a finalize process is performed on the dual-layer write-once type DVD 10, the disk information (e.g. UDF and VMG) is recorded into the reserved area 52 of the first layer, and if there is a remaining unrecorded area in a direction to the tail position P8 in the recording area 46 of the second layer, e.g. NULL data is recorded into this unrecorded area (step S75).

As explained above, the recording / reproducing apparatus 4 in the fourth embodiment issues the cell close command when the VOB is recorded up to near the tail position P6 of the recording area 43 of the first layer, stops the encoding process for forming the VOB to be recorded next, forms one VOB (or special VOB) by using the content data that is stored in the buffer memory 18A to form the VOB to be recorded next, at this time point when the encoding process is stopped, and records the VOB into the tail area of the recording area of the first layer. After that, the recording / reproducing apparatus 4 records the dummy data into the unrecorded area 122, which is left in the tail area of the recording area of the first layer, to thereby fill the unrecorded area 122 with the dummy data. Moreover, the recording / reproducing apparatus 4 forms the so-called dummy cell in the unrecorded area 122 by using the video data or audio data having the same attribute as that of video data or audio data, which is the content data recorded on the dual-layer write-once type DVD 10 in the real-time recording process, as the dummy data. By this, it is possible to prevent the cell from being recorded over the first layer and the second layer. Moreover, it is also possible to prevent the unrecorded area from being left in the tail portion of the recording area 43 of the first layer when a finalize process is performed. Thus, it is possible to record the content data in real time over the first layer and the second layer of the dual-layer write-once type DVD 10 in compliance with the DVD video standard.

Moreover, according to the recording / reproducing apparatus 4 in the fourth embodiment, since the cell can be recorded up to the tai position P6 of the recording area 43 of the first layer, it is possible to prevent that nothing is displayed on a screen immediately before a layer change, a noise is displayed on the screen, or no sound is produced, when the content data is reproduced.

Moreover, according to the recording / reproducing apparatus 4 in the fourth embodiment, since it is possible to comply with the DVD standard, it is possible to provide compatibility with competitors' products with regard to the recording and reproduction of the content data.

Moreover, the recording / reproducing apparatus 4 in the fourth embodiment closes the cell near the tail position P6 of the recording area 43 of the first layer, to thereby form one VOB with a special length, which is to be recorded into the tail area of the recording area 43 of the first layer, and record the one VOB into the tail area of the recording area 43. By this, it is possible to record the content data to be recorded, i.e. the content data which is actually to be reproduced, up to nearly the limit of the tail position P6 of the recording area 43 of the first layer (i.e. up to a position which is located only the length of one or several VOBU in front of the tail position P6). Therefore, it is possible to effectively use the recording area of the dual-layer write-once type DVD, to thereby increase the substantial recording capacity of the content data.

Moreover, according to the recording / reproducing apparatus 4 in the fourth embodiment, since it records the special VOB into the tail area of the recording area 43 of the first layer (the step S69 in FIG. 12), and records the dummy data into the remaining unrecorded area in the tail area in real time in continuity with the special VOB (the step S70), it is possible to easily prevent link loss from being generated near the position P33 (refer to FIG. 13) in the tail area. That is, even if the zero link is not used as a linking method in contrast to the recording / reproducing apparatus 2 in the second embodiment, it is possible to prevent the generation of the link loss. In other words, it is possible to record the special VOB and the dummy data (or dummy cell) in continuity, in the tail area of the recording area 43.

Incidentally, in the real-time recording by the recording / reproducing apparatus 4, the following case is exemplified: the memories 61B and 62B are provided, the material data for dummy is stored in these memories, and the dummy data is generated by using the material data for dummy. The present invention, however, is not limited to this. For example, after the real-time recording is ended on a series of the content data to be recorded into the recording are 43 of the first layer and the recording area 46 of the second layer, the dummy data may be generated by using the content data which remains in the buffer memories 61A and 62A of the encoders 61 and 62 or the buffer memory 18A of the VOB formation device 18. By this, it is possible to eliminate the memories 61B and 62B, and to reduce the number of the parts of the recording / reproducing apparatus 4.

Moreover, the encoders 61 and 62 and the VOB formation device 18 in FIG. 11 are a specific example of the encoding device and the encoding process. Moreover, the step S66, the step S69, and the step S72 in FIG. 12 are a specific example of the recording device. Moreover, the step S64 is a specific example of the encoding process. The step S67 is a specific example of the judging device and the judging process. The step S71 is a specific example of the layer changing device and the layer changing process. Moreover, the step S66 is a specific example of the first recording process, and the step S68 to the step S70 are a specific example of the tail area recording process and the tail area recording method. Moreover, the step S68 is a specific example of the special data block forming process, the step S69 is a specific example of the special data block recording process, and the step S70 is a specific example of the dummy data recording device and the dummy data recording process. Moreover, the step S70 is a specific example of the dummy data generating device. Moreover, the step S72 is a specific example of the second recording process. Moreover, the VOB is a specific example of the data block, and the special VOB is a specific example of the special data block.

Incidentally, in the explanations about the real-time recording process by the aforementioned recording / reproducing apparatuses 1 to 4, the following case is exemplified: the content data is additionally recorded (or written once) onto the dual-layer write-once type DVD 10 on which the content data was recorded once in the past and thus one VTS 51 is already recorded in the recording area 43 of the first layer. The real-time recording process by the aforementioned recording / reproducing apparatuses 1 to 4, however, can be also applied to the case that the content data is recorded onto an unrecorded two-layer write-once type DVD.

Moreover, in the explanations about the real-time recording process by the aforementioned recording / reproducing apparatuses 1 to 4, the following case is exemplified: one VOB is provided with once cell. The real-time recording process by the aforementioned recording / reproducing apparatuses 1 to 4, however, can be also applied to the case that one VOB is provided with several cells.

Moreover, the aforementioned recording / reproducing apparatuses 1 to 4 receive the analog video signal and the analog audio signal from the TV broadcast station or the video camera, convert them to the digital video signal and the digital audio signal, encode them, and record them onto the dual-layer write-once type DVD 10. The present invention, however, is not limited to this. It may receive the digital video signal and the digital audio signal, encode them, and record them. Moreover, it may receive the video signal and the audio signal, which are already encoded by the DVD video standard, and re-encode them fully or partially, and record them. Moreover, the present invention can be also applied to a recording apparatus without a reproduction function of reproducing the content data. Moreover, the signal supply source for supplying the video signal and the audio signal to the recording apparatus is not limited to the TV broadcast station, the video camera, or the like. Moreover, the content data may be only the video signal.

Incidentally, the recording apparatus of the present invention is not limited to AV equipment, such as a DVD recorder, but it can be realized by making a computer read a computer program. In this case, a computer program is prepared to realize the functions of the aforementioned encoders 16, 17, 61, and 62, the VOB formation device 18, the recording control device 19, the system control devices 30, 63, 81, 111, or the like. Specifically, a computer program is prepared to realize each of the steps shown in FIG. 12.

The present invention is not limited to the aforementioned embodiments, and various changes may be made, if desired, without departing from the essence or spirit of the invention which can be read from the claims and the entire specification. A recording apparatus, a recording method, and a computer program which realizes these functions, all of which involve such changes, are also intended to be within the technical scope of the present invention.

Industrial Applicability

The recording apparatus and the recording method for dual-layer recording disk according to the present invention can be applied to a recording apparatus, such as a DVD recorder, which records the content data onto an optical disk having two recording layers, such as a DVD.

## Claims

**1.** A recording apparatus (3) for recording content data over two layers of a dual-layer recording disk, said recording apparatus (3) comprising:

an encoding device (16,17) for encoding the content data, to thereby form a data block including the encoded content data;
a recording device (19) for recording the data block formed by said encoding device (16,17), onto the dual-layer recording disk; and
a layer changing device (81) for changing a recording area into which said recording device records the data block, from a recording area of a first layer to a recording area of a second layer of the dual-layer recording disk, said recording device (19) comprising a dividing / recording device (18) which divides the data block if the entire data block cannot be recorded into an unrecorded area in a tail area of the recording area of the first layer, which records a former portion of the divided data block into an unrecorded area in the tail area of the recording area of the first layer, and which records a latter portion of the divided data block into the recording area of the second layer.

**2.** The recording apparatus (3) according to claim 1, wherein said encoding device (16,17) performs a closed-GOP-encoding process on one portion or all the content data included in the data block which is to be divided by the dividing / recording device (18).

**3.** The recording apparatus (3) according to claim 1, wherein said encoding device (16,17) performs an open-GOP-encoding process on one portion or all the content data included in the data block which is to be divided by the dividing / recording device (18).

**4.** A recording apparatus (4) for recording content data over two layers of a dual-layer recording disk, said recording apparatus (4) comprising:

an encoding device (61,62) for encoding the content data, to thereby form a data block including the encoded content data;
a recording device (19) for recording the data block formed by said encoding device (61,62), onto the dual-layer recording disk;
a layer changing device (111) for changing a recording area into which said recording device records the data block, from a recording area of a first layer to a recording area of a second layer of the dual-layer recording disk;
a judging device (111) for judging whether the data block is recorded by said recording device (19) up to near a tail position of the recording area of the first layer; and
a dummy data recording device (19) for recording dummy data onto the dual-layer recording disk,
said encoding device (61,62) forming a special data block by using the content data on which an encoding process is performed to form the data block to be recorded next, when the judgment is performed by said judging device or when a judgment result by said judging device (111) is sent to said encoding device, or at about this time point,
said recording device (19) recording the special data block formed by said encoding device (61,62), into an unrecorded area in a tail area of the recording area of the first layer, following the data block which is already recorded immediately before the unrecorded area,
said dummy data recording device (19) recording the dummy data into the unrecorded area in the tail area of the recording area of the first layer after the special data block is recorded.

**5.** The recording apparatus (4) according to claim 4, wherein said encoding device (61,62) forms the special data block by using the content data which is stored in a buffer memory to form the data block to be recorded next, when the judgment is performed by said judging device (111) or when the judgment result by said judging device is sent to said encoding device, or at about this time point.

**6.** The recording apparatus (4) according to claim 4, wherein said encoding device (61,62) stops the encoding process for forming the data block to be recorded next, and forms the special data block by using the content data which is already stored in a buffer memory to form the data block to be recorded next when the encoding process is stopped, when the judgment is performed by said judging device (111) or when the judgment result by said judging device is sent to said encoding device, or at about this time point.

**7.** The recording apparatus (4) according to claim 4, wherein the recording of the special data block by said recording device (19) and the recording of the dummy data by said dummy data recording device (19) are performed in real time continuously.

**8.** The recording apparatus (4) according to claim 4, wherein said dummy data recording device (19) comprises a dummy data generating device (18) for generating the dummy data by using the content data which is stored in a buffer memory for the encoding process performed by said encoding device (61,62).

**9.** The recording apparatus (4) according to claim 4, further comprising a memory device for storing therein material data for dummy,
said dummy data recording device (18A) comprising a dummy data generating device (18) for generating the dummy data by using the material data for dummy, which is stored in said memory device.

**10.** A recording apparatus (2) for recording content data over two layers of a dual-layer recording disk, said recording apparatus (2) comprising:

an encoding device (61,62) for encoding the content data, to thereby form a data block having a predetermined maximum length and including the encoded content data;
a recording device (19) for recording the data block formed by said encoding device (61,62), onto the dual-layer recording disk;
a layer changing device (63) for changing a recording area into which said recording device (19) records the data block, from a recording area of a first layer to a recording area of a second layer of the dual-layer recording disk; and
a dummy data recording device (19) for recording dummy data onto the dual-layer recording disk,
said recording device (19) recording the data block formed by said encoding device (61,62), until a length of an unrecorded area which exists in a tail area of the recording area of the first layer becomes less than the maximum length of the data block,
said dummy data recording device (19) recording the dummy data into the unrecorded area after the data block is recorded by said recording device (19) until the length of the unrecorded area becomes less than the maximum length of the data block.

**11.** The recording apparatus (2) according to claim 10, wherein said dummy data recording device (19) records the dummy data into the unrecorded area after real-time recording of a series of content data to be recorded into the recording area of the first layer and the recording area of the second layer.

**12.** The recording apparatus (2) according to claim 10, further comprising an area ensuring device (63) for ensuring a recording position adjustment area, which has substantially the same length as that of the unrecorded area which exists in the tail area of the recording area of the first layer, in a head area of the recording area of the second layer,
said recording device (19) recording the data block from a position which follows the recording position adjustment area, in the recording area of the second layer,
said dummy data recording device (19) recording the dummy data into the recording position adjustment area.

**13.** The recording apparatus (2) according to claim 10, wherein said dummy data recording device (19) comprises a dummy data generating device (18) for generating the dummy data by using the content data which is stored in a buffer memory for an encoding process performed by said encoding device (61,62).

**14.** The recording apparatus (2) according to claim 10, further comprising a memory device (18A) for storing therein material data for dummy,
said dummy data recording device (19) comprising a dummy data generating device (18) for generating the dummy data by using the material data for dummy, which is stored in said memory device (18A).

**15.** A recording apparatus (1) for recording content data over two layers of a dual-layer recording disk, said recording apparatus (1) comprising:

an encoding device (16,17) for encoding the content data, to thereby form a fixed-length data block including the encoded content data;
a recording device (19) for recording the data block formed by said encoding device (16,17), onto the dual-layer recording disk; and
a layer changing device (30) for changing a recording area into which said recording device records the data block, from a recording area of a first layer to a recording area of a second layer of the dual-layer recording disk,
said recording device (19) comprising a recording start position setting device (19) for determining a recording start position at which the recording of the data block is started in the recording area of the first layer such that a length between the recording start position and a tail position of the recording area of the first layer is n times (n is an integer of 1 or more) as long as a length of the data block.

**16.** The recording apparatus (1) according to claim 15, wherein the recording start position setting device (19) sets the recording start position by ensuring a management information recording area, which is to record therein management information as for the data block, between a head position of an unrecorded area in the recording area of the first layer and immediately before the recording start position and by adjusting a length of the management information recording area.

**17.** The recording apparatus (3) according to claim 1, wherein the data block is a cell in a DVD video standard.

**18.** The recording apparatus (4) according to claim 4, wherein the data block is a cell in a DVD video standard.

**19.** The recording apparatus (2) according to claim 10, wherein the data block is a cell in a DVD video standard.

**20.** The recording apparatus (1) according to claim 15, wherein the data block is a cell in a DVD video standard.

**21.** A recording method of recording content data over two layers of a dual-layer recording disk, said recording method comprising:

an encoding process (S44) of encoding the content data, to thereby form a data block including the encoded content data;
a recording process (S46,S52) of recording the data block formed in said encoding process (S44), onto the dual-layer recording disk; and
a layer changing process (S50) of changing a recording area into which the data block formed in said encoding process (S44) is to be recorded, from a recording area of a first layer to a recording area of a second layer of the dual-layer recording disk,
said recording process (S46,S52) comprising dividing the data block if the entire data block cannot be recorded into an unrecorded area in a tail area of the recording area of the first layer, recording a former portion of the divided data block into an unrecorded area in the tail area of the recording area of the first layer, and recording a latter portion of the divided data block into the recording area of the second layer.

**22.** A recording method of recording content data over two layers of a dual-layer recording disk, said recording method comprising:

an encoding process (S64) of encoding the content data, to thereby form a data block including the encoded content data;
a first recording process (S66) of recording the data block formed in said encoding process (S64), into a recording area of a first layer of the dual-layer recording disk;
a judging process (S67) of judging whether the data block is recorded in said first recording process up to near a tail position of the recording area of the first layer;
a tail area recording process (S69) of performing a tail area recording method in accordance with the judgment of said judging process;
a layer changing process (S71) of changing a recording area into which the data block formed in said encoding process (S64) is to be recorded, from the recording area of the first layer to a recording area of a second layer of the dual-layer recording disk; and
a second recording process (S72) of recording the data block formed in said encoding process (S64), into the recording area of the second,

said tail area recording method comprising:

a special data block forming process of forming a special data block by using the content data on which an encoding process (S64) is performed to form the data block to be recorded next, when the judgment is performed in said judging process (S67) or when a judgment result in said judging process (S67) is sent to an encoding device (61,62) which performs the encoding process in said encoding process (S64), or at about this time point;
a special data block recording process of recording the special data block formed in the special data block forming process, into an unrecorded area in a tail area of the recording area of the first layer, following the data block which is already recorded immediately before the unrecorded area; and
a dummy data recording process (S70) of recording dummy data into the unrecorded area in the tail area of the recording area of the first layer after the special data block is recorded in the special data block recording process,
the recording of the special data block in the special data block recording process and the recording of the dummy data in the dummy data recording process (S70) are performed in real time continuously.

**23.** A recording method of recording content data over two layers of a dual-layer recording disk, said recording method comprising:

an encoding process of encoding the content data, to thereby form a data block having a predetermined maximum length and including the encoded content data;
a first recording process (S26) of recording the data block formed in said encoding process, into a recording area of a first layer of the dual-layer recording disk until a length of an unrecorded area which exists in a tail area of the recording area of the first layer becomes less than the maximum length of the data block;
a layer changing process (S29) of changing a recording area into which the data block formed in said encoding process is to be recorded, from the recording area of the first layer to a recording area of a second layer of the dual-layer recording disk;
a second recording process (S31) of recording the data block formed in said encoding process, into the recording area of the second layer; and
a dummy data recording process (S34) of recording dummy data into the unrecorded data.

**24.** A recording method of recording content data over two layers of a dual-layer recording disk, said recording method comprising:

an encoding process of encoding the content data, to thereby form a fixed-length data block including the encoded content data;
a recording process (S6,S9) of recording the data block formed in said encoding process, onto the dual-layer recording disk; and
a layer changing process (S8) of changing a recording area into which the data block formed in said encoding process is to be recorded, from a recording area of a first layer to a recording area of a second layer of the dual-layer recording disk,
said recording process (S6,S9) comprising determining a recording start position at which the recording of the data block is started in the recording area of the first layer such that a length between the recording start position and a tail position of the recording area of the first layer is n times (n is an integer of 1 or more) as long as a length of the data block.

**25.** A computer program for making a computer function as the recording apparatus (3) according to claim 1.

**26.** A computer program for making a computer function as the recording apparatus (4) according to claim 4.

**27.** A computer program for making a computer function as the recording apparatus (2) according to claim 10.

**28.** A computer program for making a computer function as the recording apparatus (1) according to claim 15.

[FIG. 1]

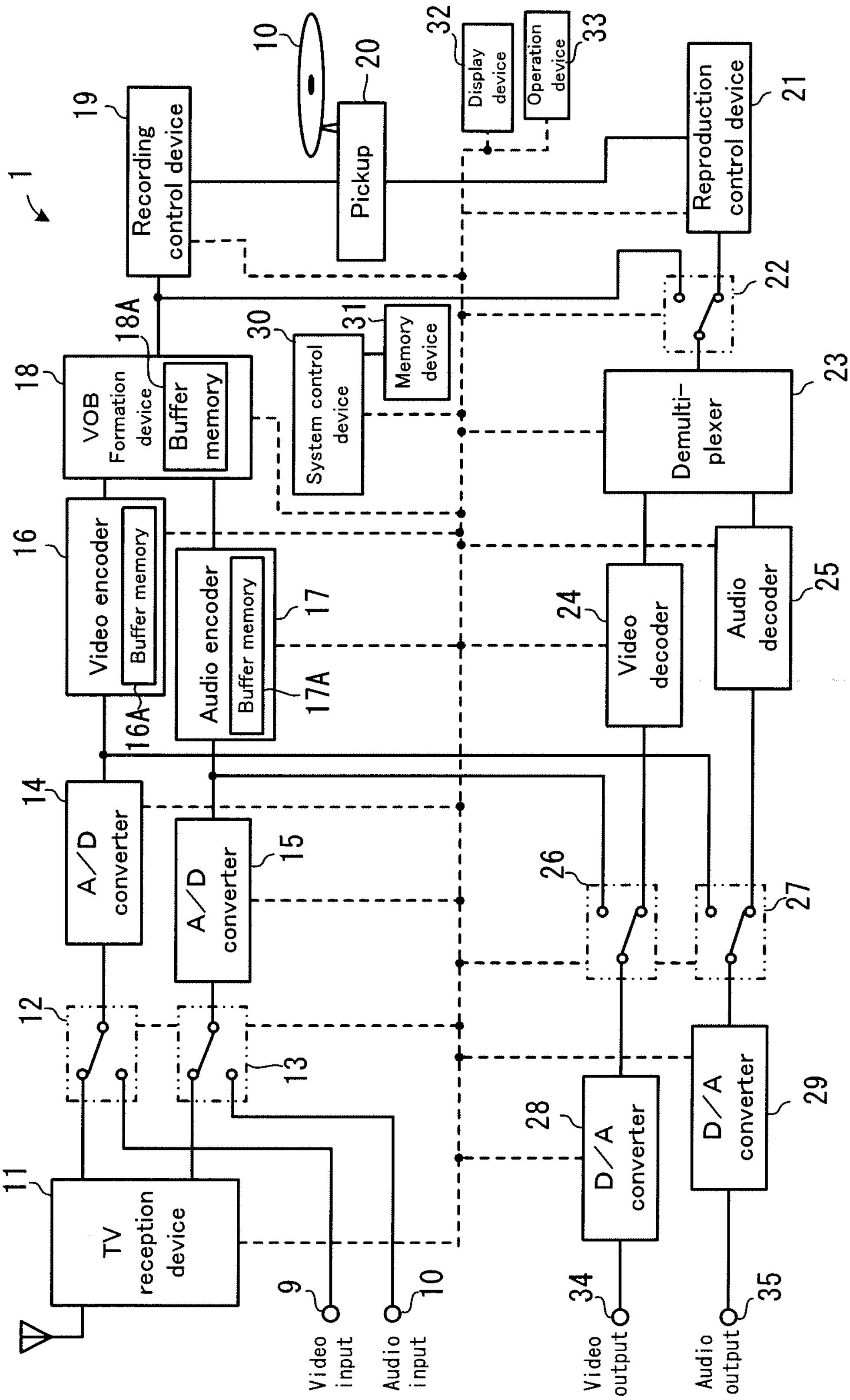
1
TV reception device
11
Video input
9
Audio input
10
12
13
A/D converter
14
A/D converter
15
Video encoder
Buffer memory
16
16A
Audio encoder
Buffer memory
17
17A
VOB Formation device
Buffer memory
18
18A
Recording control device
19
10
Pickup
20
System control device
30
Memory device
31
Display device
32
Operation device
33
Reproduction control device
21
22
Demulti-plexer
23
Video decoder
24
Audio decoder
25
26
27
D/A converter
28
D/A converter
29
Video output
34
Audio output
35

[FIG. 2]

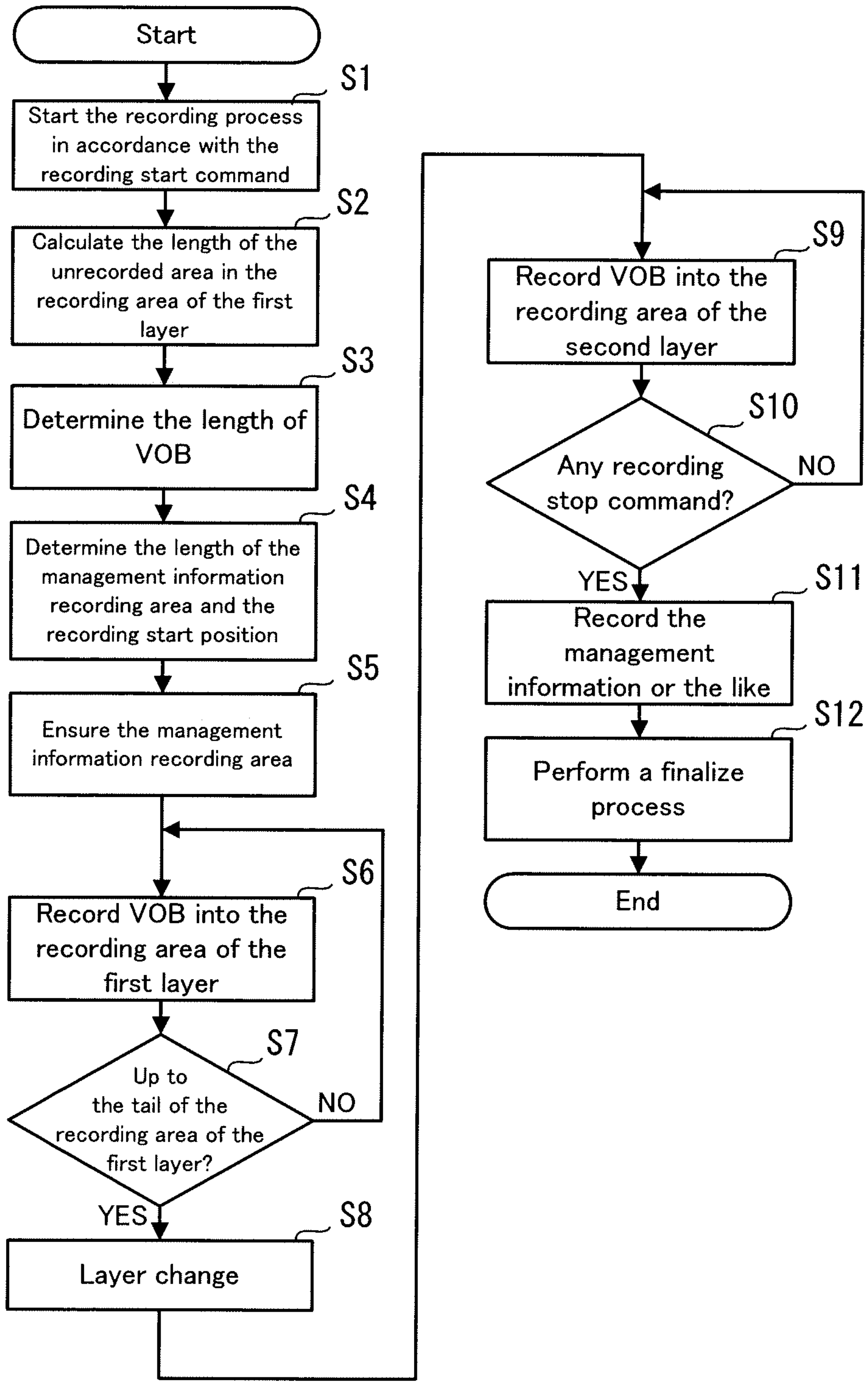
Start
S1
Start the recording process in accordance with the recording start command
S2
Calculate the length of the unrecorded area in the recording area of the first layer
S3
Determine the length of VOB
S4
Determine the length of the management information recording area and the recording start position
S5
Ensure the management information recording area
S6
Record VOB into the recording area of the first layer
S7
Up to the tail of the recording area of the first layer?
NO
YES
S8
Layer change
S9
Record VOB into the recording area of the second layer
S10
Any recording stop command?
NO
YES
S11
Record the management information or the like
S12
Perform a finalize process
End

[FIG. 3]

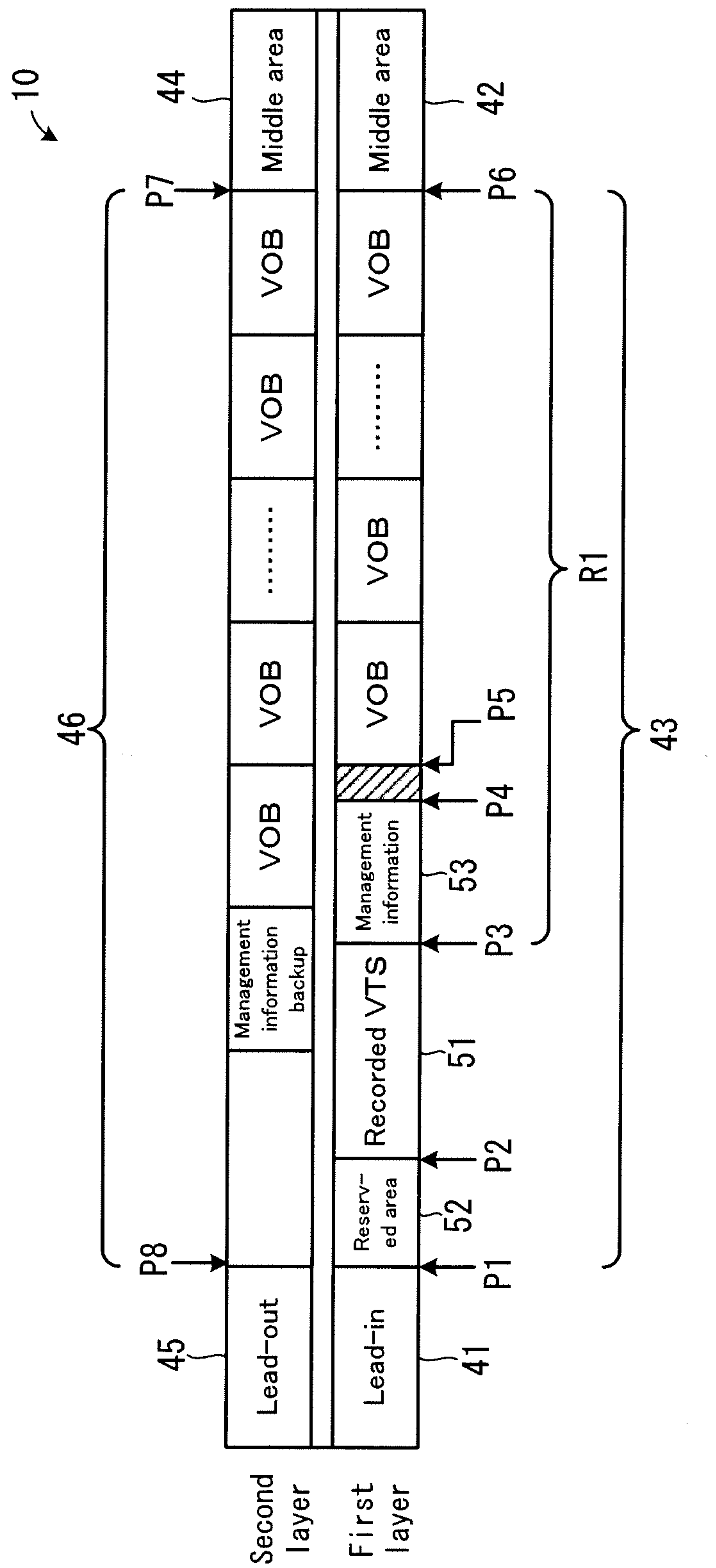
10
Second layer
First layer
Lead-out
45
Lead-in
41
P8
P1
Reserv-ed area
52
P2
Recorded VTS
51
Management information backup
Management information
53
P3
P4
P5
VOB
VOB
VOB
VOB
VOB
VOB
VOB
..........
..........
P7
P6
Middle area
44
Middle area
42
46
R1
43

[FIG. 4]

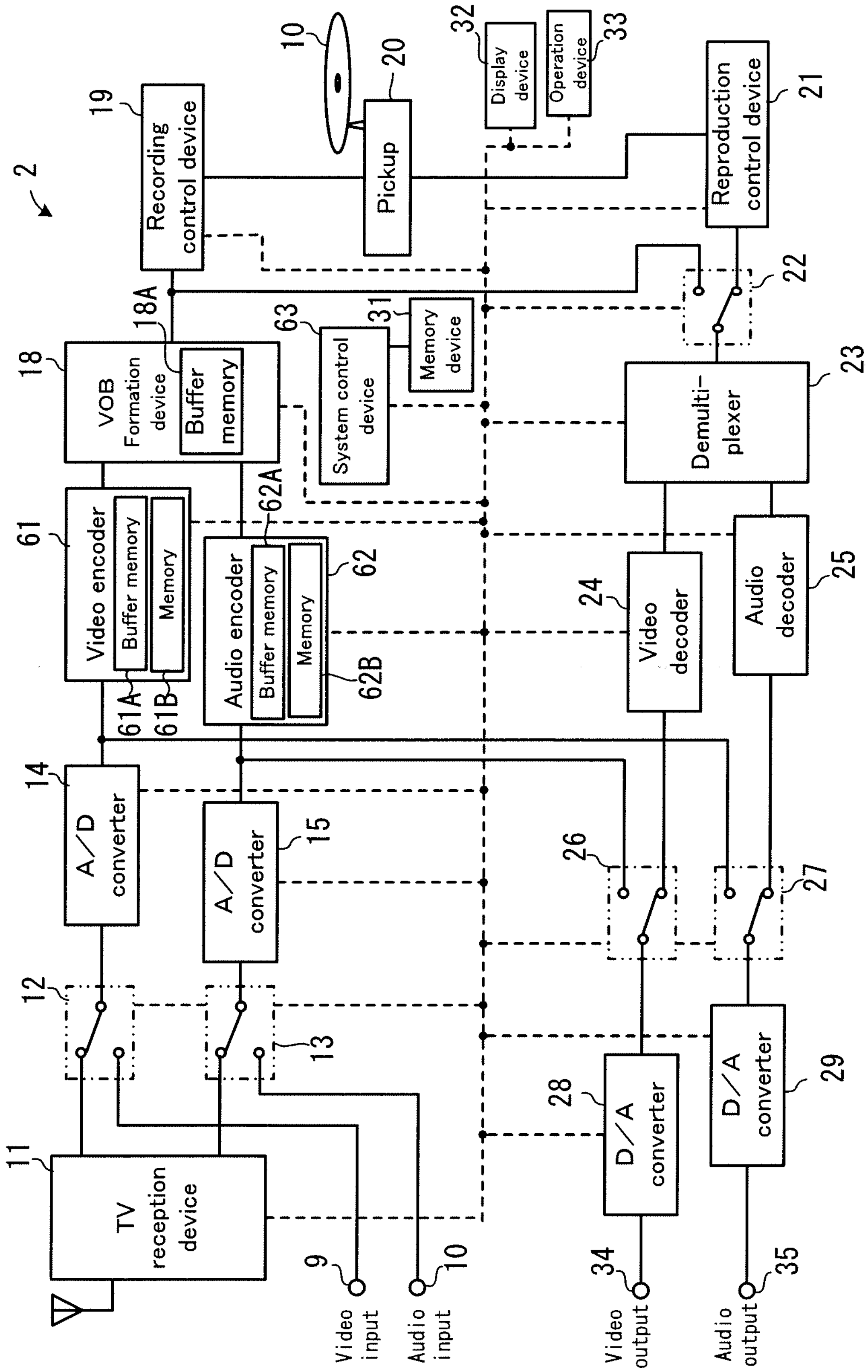
2
TV reception device
A/D converter
A/D converter
Video encoder
Buffer memory
Memory
Audio encoder
Buffer memory
Memory
VOB Formation device
Buffer memory
Recording control device
Pickup
System control device
Memory device
Display device
Operation device
Reproduction control device
Demulti-plexer
Video decoder
Audio decoder
D/A converter
D/A converter
Video input
Audio input
Video output
Audio output
9
10
11
12
13
14
15
18
18A
19
20
21
22
23
24
25
26
27
28
29
31
32
33
34
35
61
61A
61B
62
62A
62B
63

[FIG. 5]

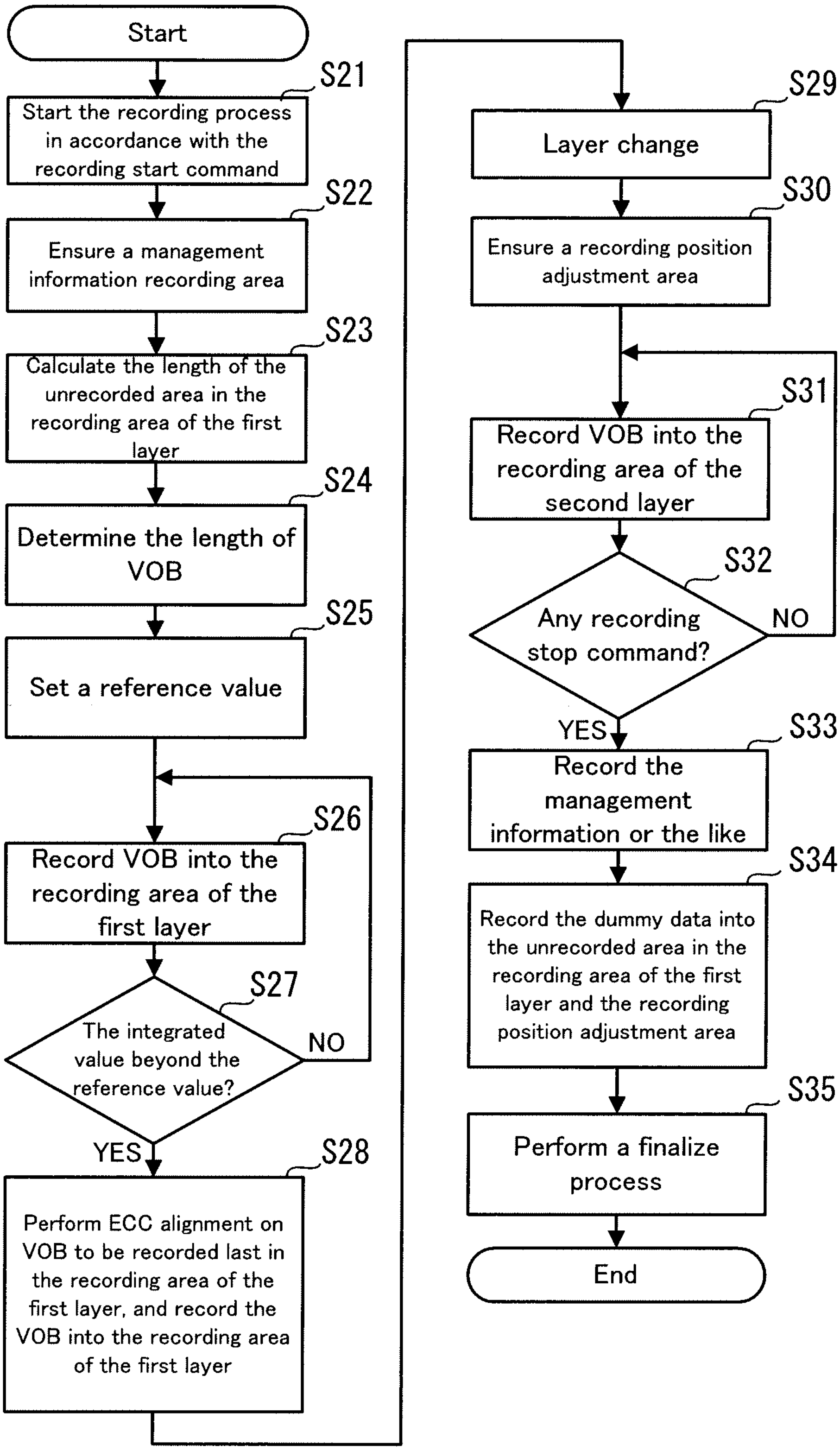
Start
S21
Start the recording process in accordance with the recording start command
S22
Ensure a management information recording area
S23
Calculate the length of the unrecorded area in the recording area of the first layer
S24
Determine the length of VOB
S25
Set a reference value
S26
Record VOB into the recording area of the first layer
S27
The integrated value beyond the reference value?
NO
YES
S28
Perform ECC alignment on VOB to be recorded last in the recording area of the first layer, and record the VOB into the recording area of the first layer
S29
Layer change
S30
Ensure a recording position adjustment area
S31
Record VOB into the recording area of the second layer
S32
Any recording stop command?
NO
YES
S33
Record the management information or the like
S34
Record the dummy data into the unrecorded area in the recording area of the first layer and the recording position adjustment area
S35
Perform a finalize process
End

[FIG. 6]

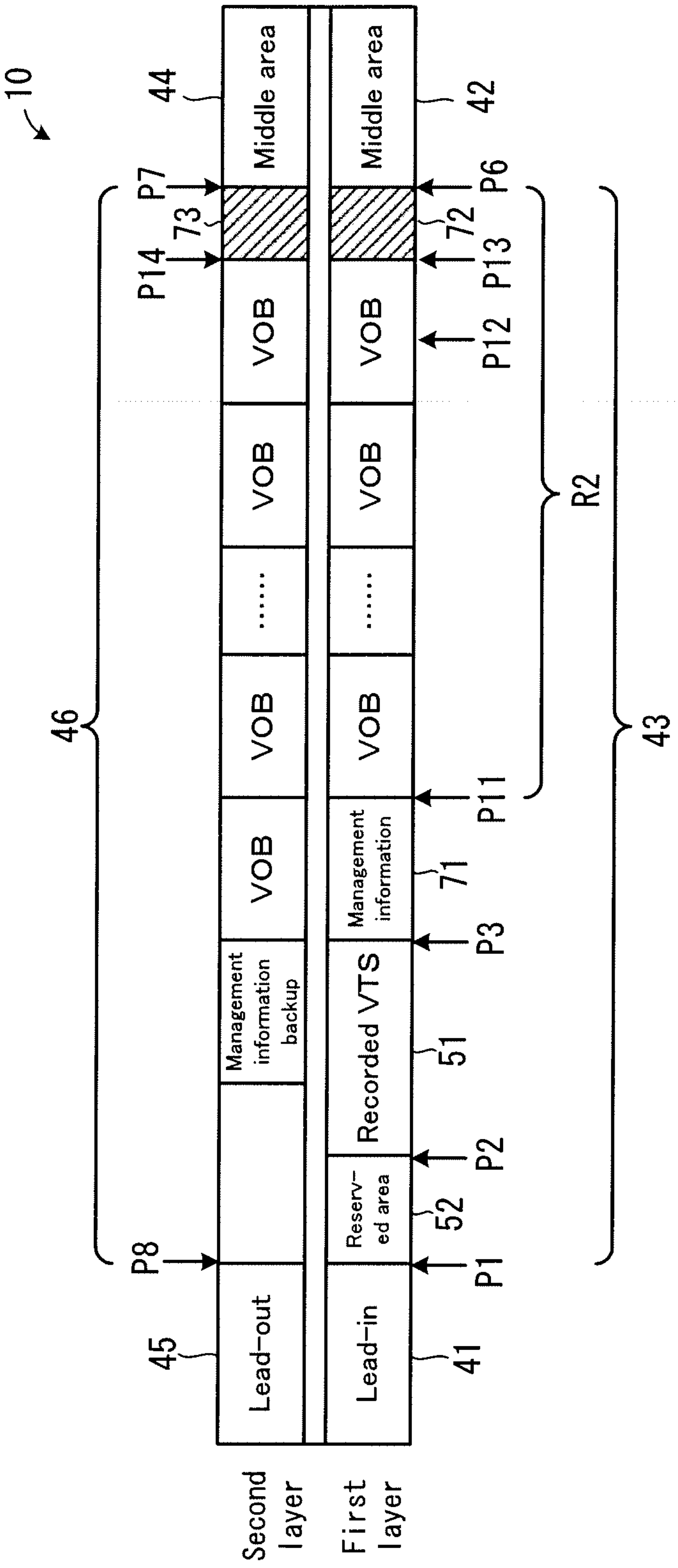
10
Second layer
First layer
Lead-out
Lead-in
Middle area
Middle area
Management information backup
Reserv-ed area
Recorded VTS
Management information
VOB
VOB
VOB
VOB
VOB
VOB
VOB
......
......
41
42
43
44
45
46
51
52
71
72
73
R2
P1
P2
P3
P6
P7
P8
P11
P12
P13
P14

[FIG. 7]

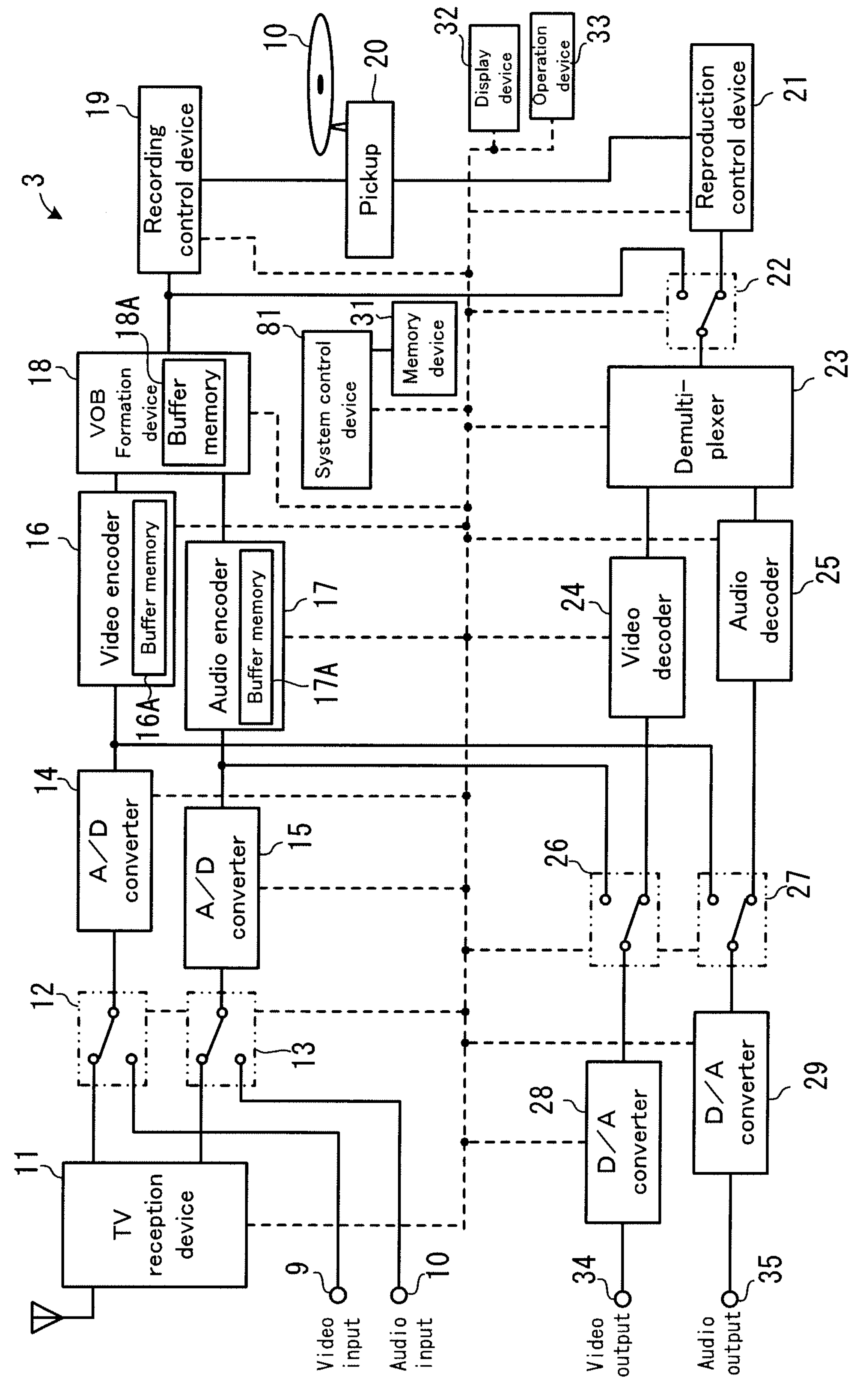

3
TV reception device
11
Video input
9
Audio input
10
12
13
A/D converter
14
A/D converter
15
Video encoder
16
Buffer memory
16A
Audio encoder
17
Buffer memory
17A
VOB Formation device
18
Buffer memory
18A
Recording control device
19
10
Pickup
20
System control device
81
Memory device
31
Display device
32
Operation device
33
Reproduction control device
21
22
Demulti-plexer
23
Video decoder
24
Audio decoder
25
26
27
D/A converter
28
D/A converter
29
Video output
34
Audio output
35

[FIG. 8]

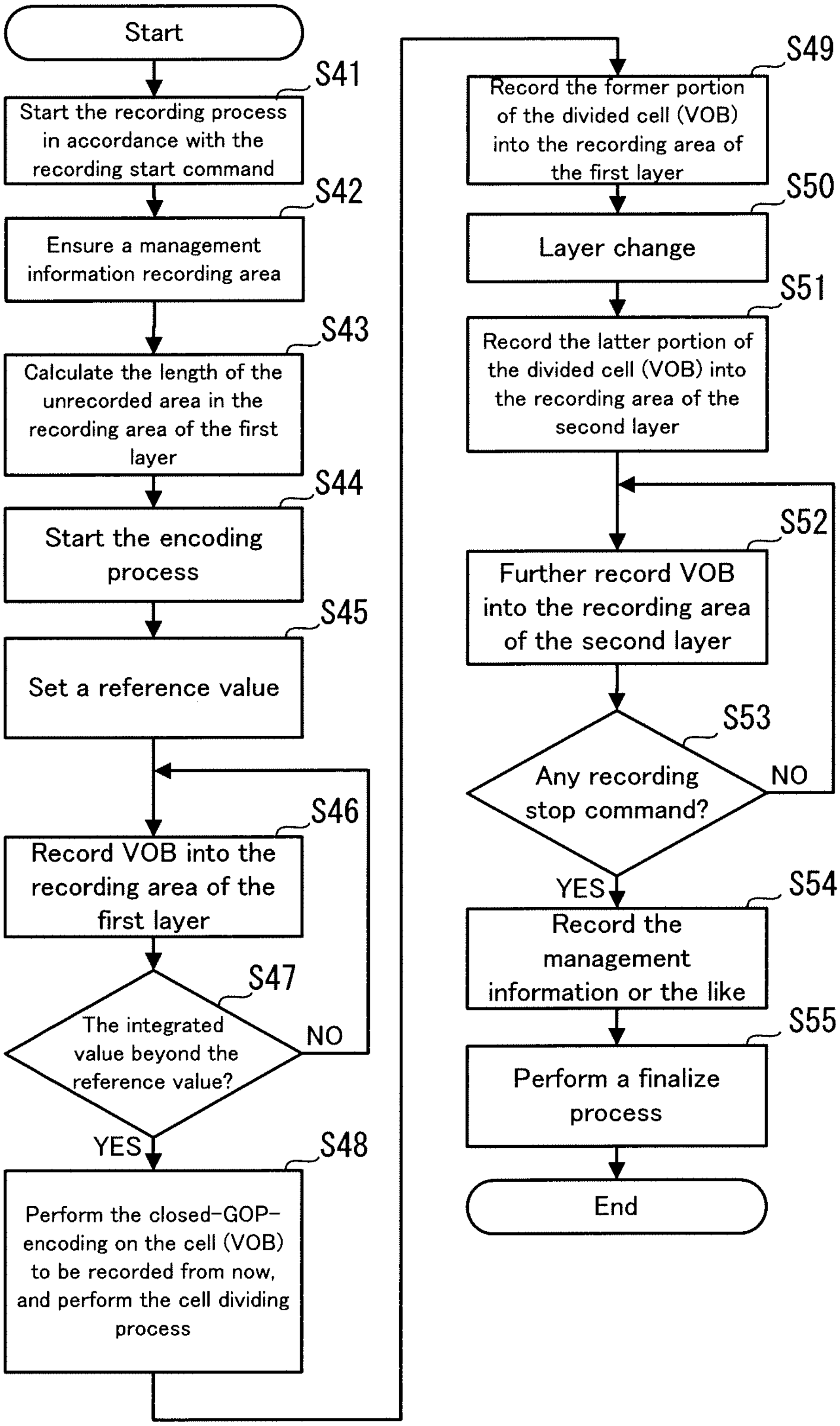
Start
S41
Start the recording process in accordance with the recording start command
S42
Ensure a management information recording area
S43
Calculate the length of the unrecorded area in the recording area of the first layer
S44
Start the encoding process
S45
Set a reference value
S46
Record VOB into the recording area of the first layer
S47
The integrated value beyond the reference value?
NO
YES
S48
Perform the closed-GOP-encoding on the cell (VOB) to be recorded from now, and perform the cell dividing process
S49
Record the former portion of the divided cell (VOB) into the recording area of the first layer
S50
Layer change
S51
Record the latter portion of the divided cell (VOB) into the recording area of the second layer
S52
Further record VOB into the recording area of the second layer
S53
Any recording stop command?
NO
YES
S54
Record the management information or the like
S55
Perform a finalize process
End

[FIG. 9]

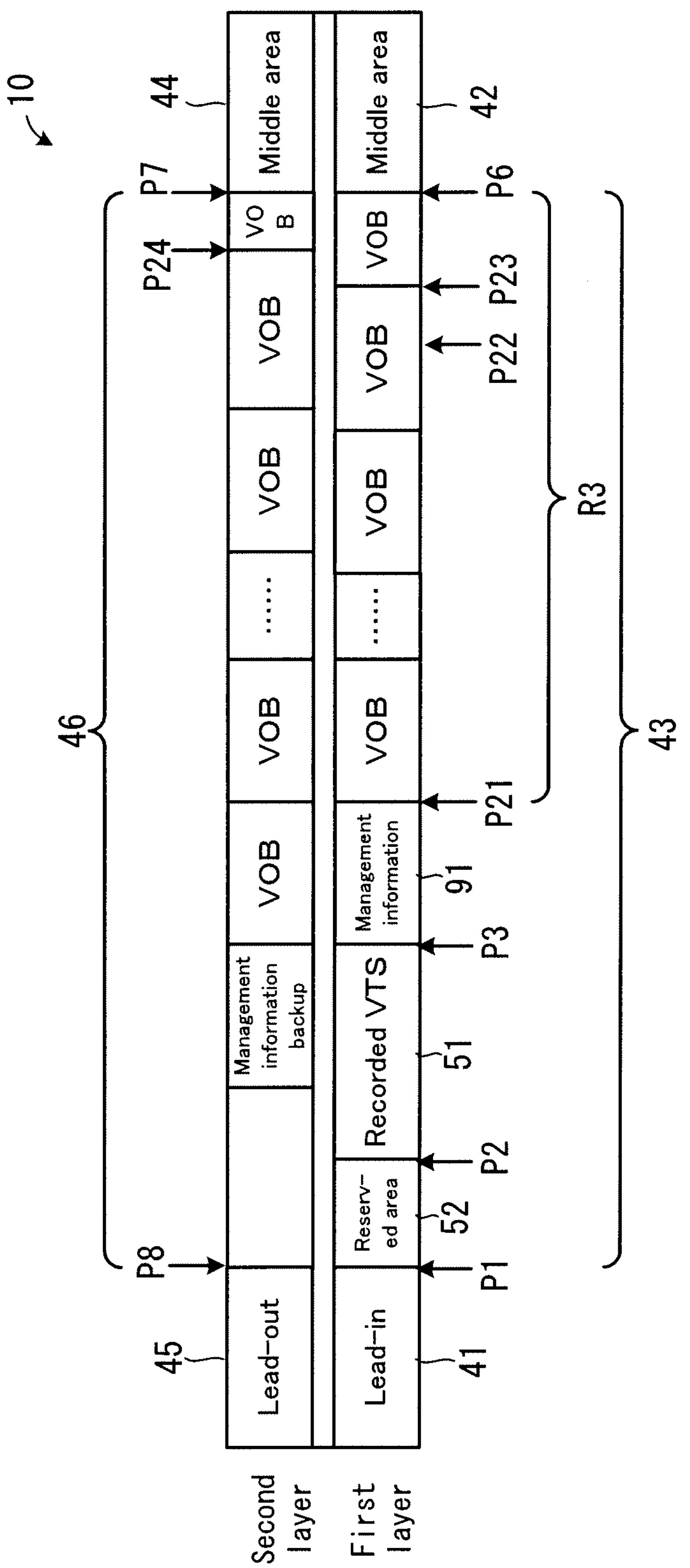
10
Second layer
First layer
Lead-out
Lead-in
Middle area
Middle area
Reserv-ed area
Recorded VTS
Management information
Management information backup
VOB
VO B
......
45
41
44
42
52
51
91
46
43
R3
P1
P2
P3
P6
P7
P8
P21
P22
P23
P24

[FIG. 10]

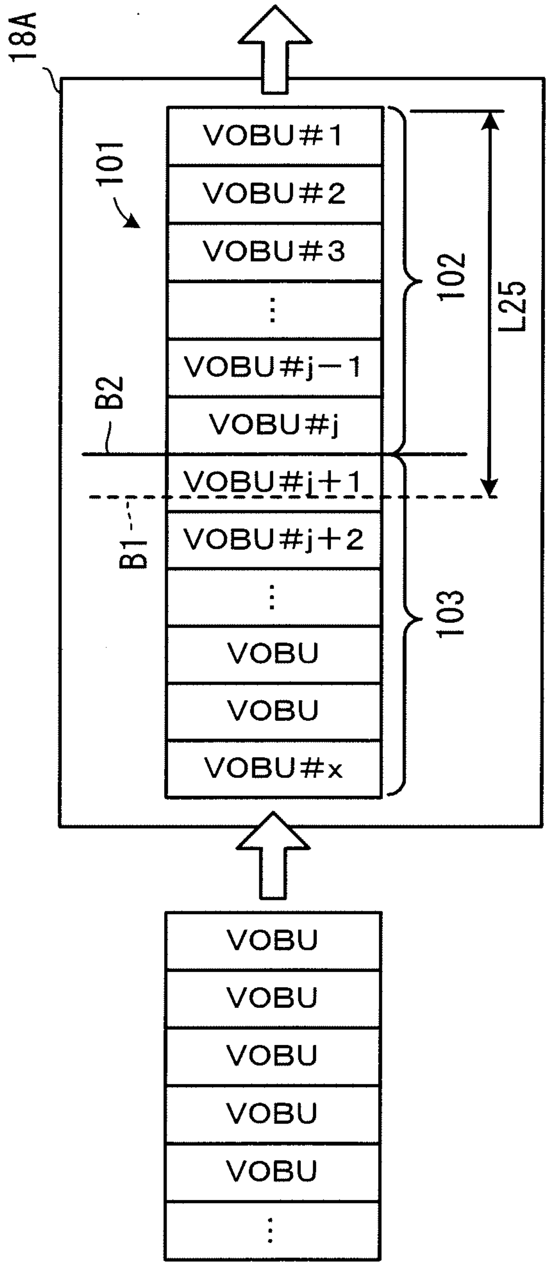
18A
101
VOBU#1
VOBU#2
VOBU#3
VOBU#j−1
VOBU#j
VOBU#j+1
VOBU#j+2
VOBU
VOBU
VOBU#x
102
103
L25
B2
B1
VOBU
VOBU
VOBU
VOBU
VOBU

[FIG. 11]

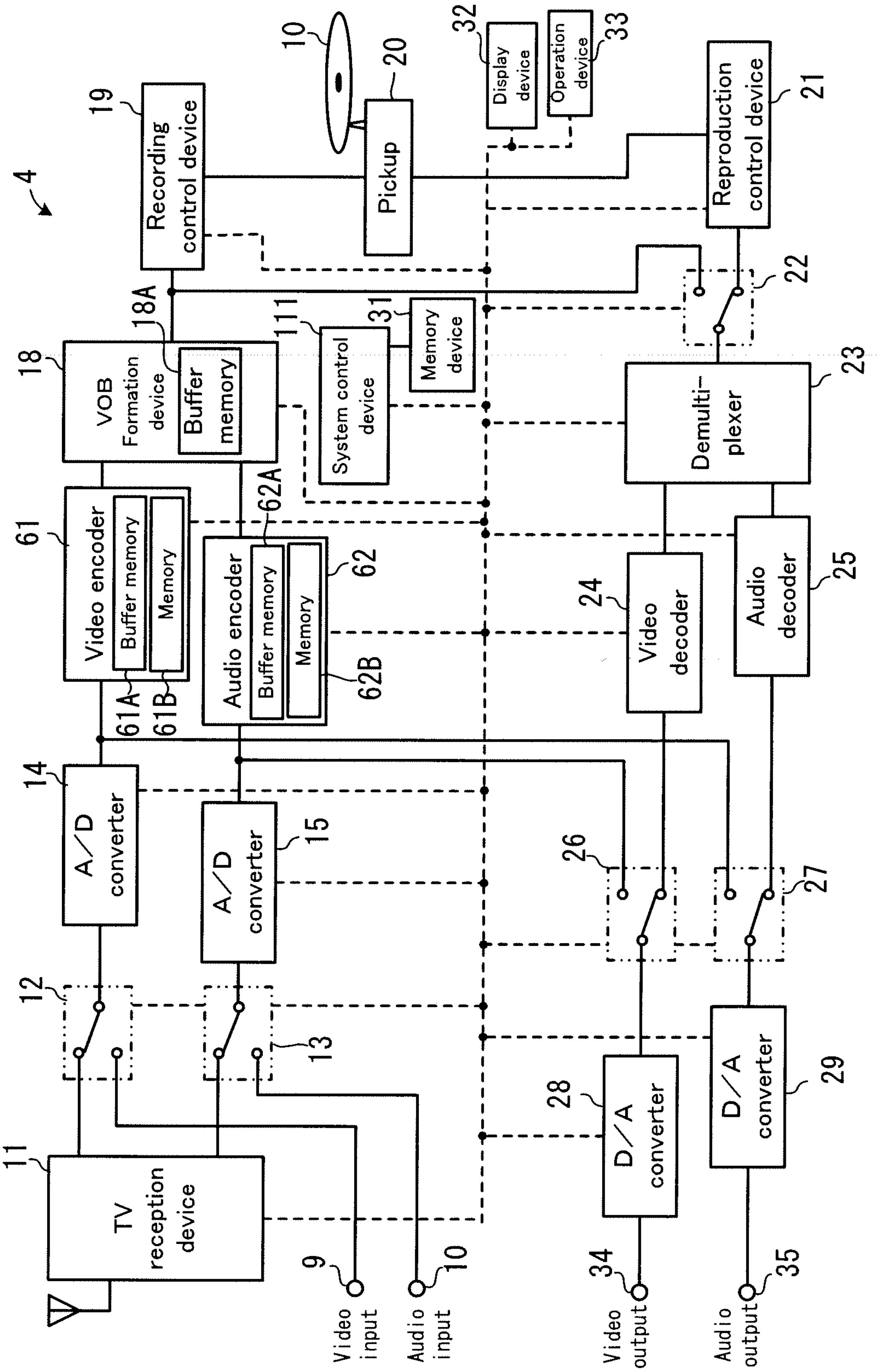
4
Recording control device
19
10
20
Pickup
Display device
32
Operation device
33
Reproduction control device
21
18
VOB Formation device
Buffer memory
18A
111
System control device
31
Memory device
22
23
Demultiplexer
61
Video encoder
Buffer memory
Memory
61A
61B
62A
62
Audio encoder
Buffer memory
Memory
62B
24
Video decoder
25
Audio decoder
14
A/D converter
15
A/D converter
26
27
12
13
11
TV reception device
28
D/A converter
29
D/A converter
9
Video input
10
Audio input
34
Video output
35
Audio output

[FIG. 12]

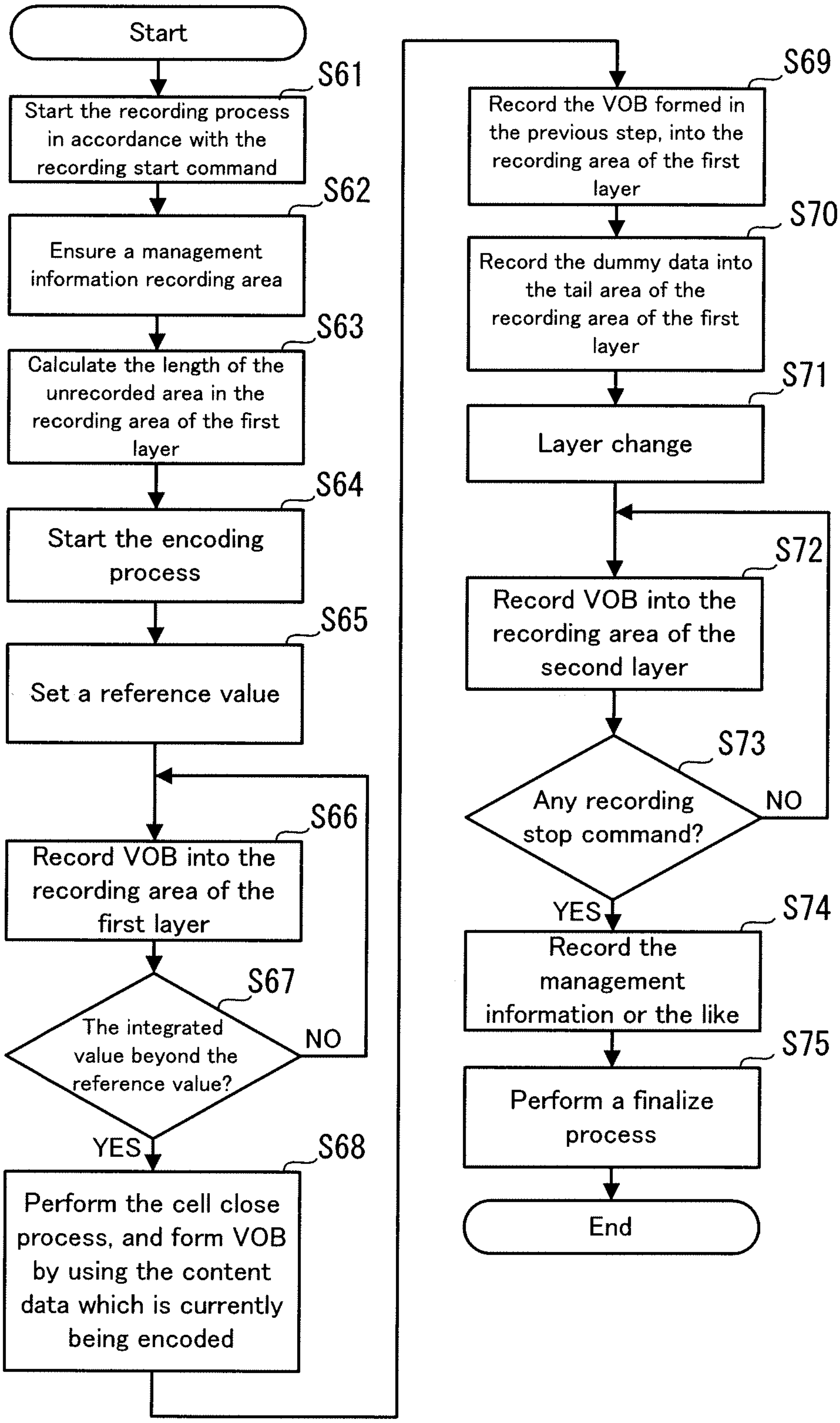
Start
S61
Start the recording process in accordance with the recording start command
S62
Ensure a management information recording area
S63
Calculate the length of the unrecorded area in the recording area of the first layer
S64
Start the encoding process
S65
Set a reference value
S66
Record VOB into the recording area of the first layer
S67
The integrated value beyond the reference value?
NO
YES
S68
Perform the cell close process, and form VOB by using the content data which is currently being encoded
S69
Record the VOB formed in the previous step, into the recording area of the first layer
S70
Record the dummy data into the tail area of the recording area of the first layer
S71
Layer change
S72
Record VOB into the recording area of the second layer
S73
Any recording stop command?
NO
YES
S74
Record the management information or the like
S75
Perform a finalize process
End

[FIG. 13]

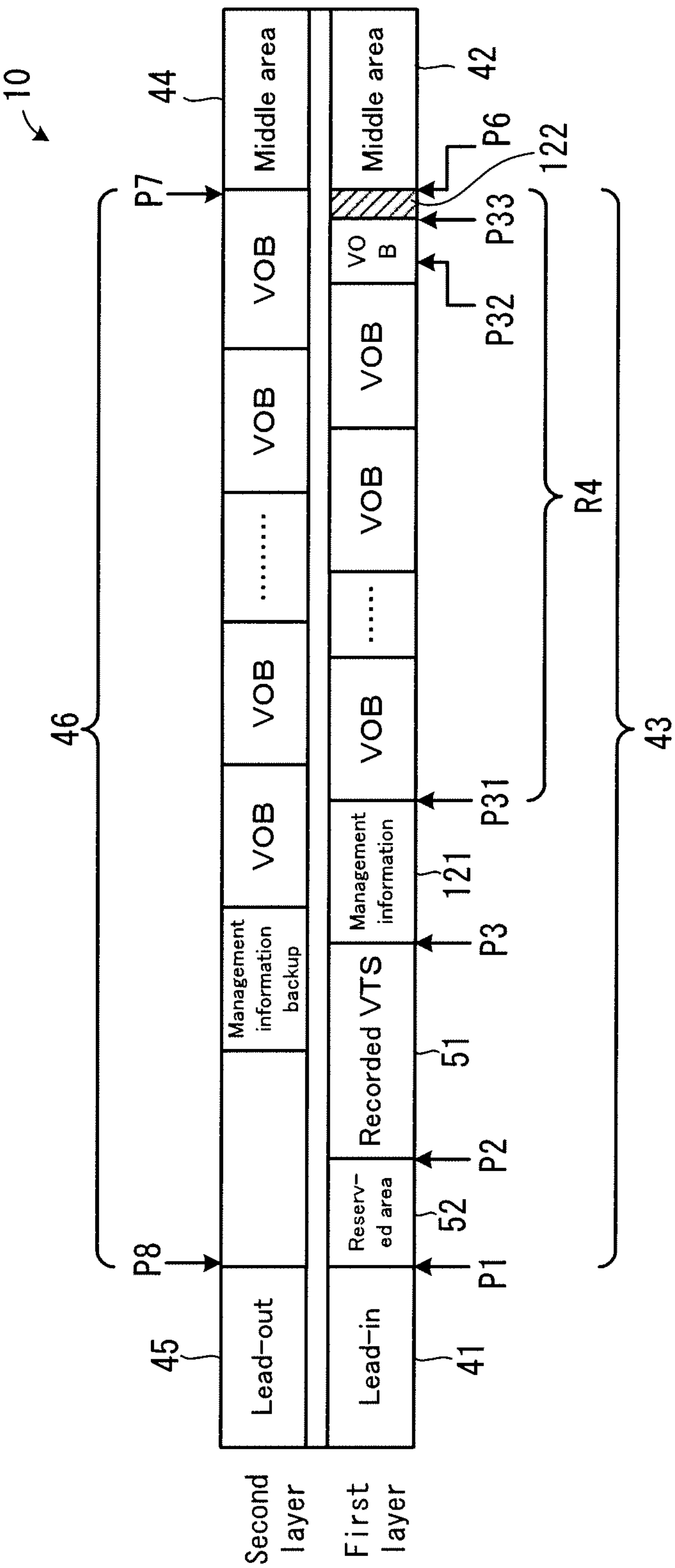
10
Second layer
First layer
Lead-out
45
Lead-in
41
P8
P1
Reserv-ed area
52
P2
Recorded VTS
51
P3
Management information backup
Management information
121
P31
VOB
VOB
........
VOB
VOB
VOB
VOB
VOB
VO B
P32
P33
122
P6
P7
Middle area
44
Middle area
42
R4
46
43

**INTERNATIONAL SEARCH REPORT**

International application No. PCT/JP2006/308109

A. CLASSIFICATION OF SUBJECT MATTER
*G11B20/12*(2006.01), *G11B7/0045*(2006.01), *G11B20/10*(2006.01)

According to International Patent Classification (IPC) or to both national classification and IPC

B. FIELDS SEARCHED

Minimum documentation searched (classification system followed by classification symbols)
*G11B20/12*(2006.01), *G11B7/0045*(2006.01), *G11B20/10*(2006.01)

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2006 |
| Kokai Jitsuyo Shinan Koho | 1971-2006 | Toroku Jitsuyo Shinan Koho | 1994-2006 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y<br>A | JP 2004-005855 A (Toshiba Corp.), 08 January, 2004 (08.01.04), Par. Nos. [0052] to [0067]; Fig. 5 & US 2003/0223140 A1 | 1-3,17,21,25<br>10-14,19, 23,27 |
| Y<br>A | JP 2004-355714 A (Ricoh Co., Ltd.), 16 December, 2004 (16.12.04), Par. No. [0043] (Family: none) | 1-3,17,21,25<br>10-14,19,23, 27 |
| Y<br>A | JP 08-088854 A (Toshiba Corp.), 02 April, 1996 (02.04.96), Par. No. [0022] (Family: none) | 2,3<br>10-14,19,23, 27 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| | |
|---|---|
| Date of the actual completion of the international search<br>31 May, 2006 (31.05.06) | Date of mailing of the international search report<br>20 June, 2006 (20.06.06) |
| Name and mailing address of the ISA/<br>Japanese Patent Office<br>Facsimile No. | Authorized officer<br><br>Telephone No. |

Form PCT/ISA/210 (second sheet) (April 2005)

**INTERNATIONAL SEARCH REPORT**

International application No.
PCT/JP2006/308109

C (Continuation). DOCUMENTS CONSIDERED TO BE RELEVANT

| Category* | Citation of document, with indication, where appropriate, of the relevant passages | Relevant to claim No. |
|---|---|---|
| Y<br><br><br>A | JP 2000-285609 A (Sony Corp.), 31 October, 2000 (31.10.00), Par. Nos. [0007], [0022] to [0040]; Figs. 3 to 5, 7 (Family: none) | 4-9,15,16, 18,20,22,24, 26,28<br>10-14,19,23, 27 |
| Y<br>A | JP 2005-071567 A (NEC Electronics Corp.), 17 March, 2005 (17.03.05), Par. No. [0079] & US 2005/0031313 A1 | 4-9,18,22,26<br>10-14,19,23, 27 |
| Y<br><br>A | JP 11-232792 A (Nippon Columbia Co., Ltd.), 27 August, 1999 (27.08.99), Par. No. [0111] & US 6504993 B1 | 15,16,20,24, 28<br>10-14,19,23, 27 |
| P,X<br><br>P,A | JP 2006-059514 A (Matsushita Electric Industrial Co., Ltd.), 02 March, 2006 (02.03.06), Par. Nos. [0061] to [0073]; Figs. 12 to 14 & US 2006/0077472 A1 | 10,11,13,14, 19,23,27<br>12 |

Form PCT/ISA/210 (continuation of second sheet) (April 2005)

**INTERNATIONAL SEARCH REPORT**

International application No.
PCT/JP2006/308109

**Box No. II Observations where certain claims were found unsearchable (Continuation of item 2 of first sheet)**

This international search report has not been established in respect of certain claims under Article 17(2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☐ Claims Nos.:
because they are dependent claims and are not drafted in accordance with the second and third sentences of Rule 6.4(a).

**Box No. III Observations where unity of invention is lacking (Continuation of item 3 of first sheet)**

This International Searching Authority found multiple inventions in this international application, as follows:

The inventions of claims 1-3, 17, 21, 23 relate to that "when the entire data block cannot be recorded in the unrecorded area at the end portion of the first layer recording area, the data block is divided."

The inventions of claims 4-9, 18, 22, 26 relate to that "at the moment when judgment is performed by judging means or when the judgment result obtained by the judging means is transmitted to the encode means, a particular data block is formed by the content data which is being encoded for forming the next data block."

(Continued to extra sheet)

1. ☐ As all required additional search fees were timely paid by the applicant, this international search report covers all searchable claims.
2. ☒ As all searchable claims could be searched without effort justifying an additional fee, this Authority did not invite payment of any additional fee.
3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest** the

☐ The additional search fees were accompanied by the applicant's protest and, where applicable, payment of a protest fee..

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (April 2005)

**INTERNATIONAL SEARCH REPORT**

International application No.
PCT/JP2006/308109

Continuation of Box No.III of continuation of first sheet(2)

The inventions of claims 10-14, 19, 23, 27 relate to that "the data block formed by the encode means is recorded until the length of the unrecorded area existing at the end portion of the first layer recording area becomes shorter than the maximum length of the data block."

The inventions of claims 15, 16, 20, 24, 28 relate to that "the recording start position is decided so that the length from the recording start position where the data block recording is started in the first layer recording area to the end position of the first layer recording area is the data block length multiplied by n (n is an integer not smaller than 1).

Form PCT/ISA/210 (extra sheet) (April 2005)